# EUROPÄISCHE PATENTSCHRIFT

(11) **EP 3 728 355 B1**
(45) Veröffentlichungstag und Bekanntmachung des Hinweises auf die Patenterteilung: **20.04.2022**
(21) Anmeldenummer: 18814966.0
(22) Anmeldetag: 13.12.2018
(51) Int. Cl.: C08F 236/12, C08L 9/02, C08L 15/00

(54) **NITRIL-DIEN-CARBONSÄUREESTER-COPOLYMERE**
NITRILE DIENE CARBOXYLIC ACID ESTER COPOLYMERS
COPOLYMÈRE D'ESTER NITRILE-DIÈNE D'ACIDE CARBOXYLIQUE

(30) Priorität: 21.12.2017 EP 17290164
(43) Veröffentlichungstag der Anmeldung: 28.10.2020
(73) Patentinhaber: ARLANXEO Deutschland GmbH, 41540 Dormagen (DE)
(72) Erfinder: BRANDAU, Sven, 50859 Köln (DE); STÄBER, Robert, 35085 Ebsdorfergrund (DE); LIEBER, Susanna, 67663 Kaiserslautern (DE)
(86) Internationale Anmeldenummer: PCT/EP2018/084755
(87) Internationale Veröffentlichungsnummer: WO 2019/121321

(56) Entgegenhaltungen:
- EP-A1- 2 868 676
- EP-A1- 2 868 677
- EP-A1- 3 196 240
- WO-A2-02/02657

## Beschreibung

Die vorliegende Erfindung betrifft Nitril-Dien-Carbonsäureester-Copolymere, deren Herstellung, vulkanisierbare Zusammensetzungen enthaltend Nitril-Dien-Carbonsäureester-Copolymere und deren Herstellung, sowie Vulkanisate, basierend auf Nitril-Dien-Carbonsäureester-Copolymeren und deren Verwendung in elastomeren Bauteilen.

Unter Nitril-Dien-Copolymer (Nitrilkautschuk, abgekürzt auch als **"NBR"** bezeichnet) werden im Rahmen dieser Anmeldung Kautschuke verstanden, bei denen es sich um Co-, Ter- oder Quartärpolymere aus mindestens einem α,β-ethylenisch ungesättigten Nitril, mindestens einem konjugierten Dien und gegebenenfalls einem oder mehreren weiteren copolymerisierbaren Monomeren handelt.

NBR nimmt seit vielen Jahren einen festen Platz im Bereich der Spezialelastomere ein. Es verfügt über ein ausgezeichnetes Eigenschaftsprofil in Form einer ausgezeichneten Ölbeständigkeit und einer guten Hitzebeständigkeit. NBR weist ferner sehr gute mechanische sowie anwendungstechnische Eigenschaften auf. Aus diesem Grund finden es breite Verwendung in den verschiedensten Anwendungsgebieten und wird beispielsweise eingesetzt zur Herstellung von Dichtungen, Schläuchen im Automobil- und Maschinenbausektor, sowie auch für zahlreiche elastomere Bauteile der in der Bau-, Walzen- und Elektroindustrie.

Für viele Anwendungen ist es entscheidend, dass das Vulkanisat auf Basis von NBR eine niedrige Glasübergangstemperatur (Tg) aufweist, damit die Funktionalität des Vulkanisats auch bei geringen Temperaturen gewährleistet ist. Zusätzlich ist es auch erforderlich, dass das Vulkanisat in Kontakt mit bspw. Öl oder Kraftstoffen, eine möglichst geringe Quellung aufweist, da ansonsten das Vulkanisat an Volumen zunimmt und nicht mehr einsatzfähig ist.

Es ist bekannt, dass NBR-Copolymere aus Acrylnitril und Butadien mit sinkender Menge an Acrylnitril eine geringere Glasübergangstemperatur aufweisen.

Umgekehrt ist bekannt, dass NBR-Copolymere aus Acrylnitril und Butadien mit steigender Menge an Acrylnitril eine geringere Quellung in Öl und Kraftstoff aufweisen.

Kommerziell erhältlich ist eine Vielzahl unterschiedlicher NBR-Typen, die sich je nach Anwendungsbereich durch unterschiedliche Monomere, Molekulargewichte und Polydispersitäten sowie damit einhergehend durch unterschiedliche mechanische und physikalische Eigenschaften auszeichnen. Neben den Standardtypen werden vor allem Spezialtypen, die sich durch Gehalte spezieller **Termonomere** oder besondere Funktionalisierungen auszeichnen, zunehmend nachgefragt.

Als spezielle Termonomere sind beispielsweise α,β-ethylenisch ungesättigte **Carbonsäuren** bekannt (u.a. Acrylsäure und Methacrylsäure). Terpolymere mit diesen Termonomeren werden zusammengefasst als XNBR wobei das "X" für die Säuregruppe steht. Darunter fallen beispielsweise Monocarbonsäuren, Dicarbonsäuren und Dicarbonsäuremonoester (u.a. Monomethylmaleat oder Monobutylmaleat).

Ebenfalls bekannt sind Terpolymere mit α,β-ethylenisch ungesättigten **Carbonsäureestereinheiten** (u.a. Monocarbonsäureester wie Methylacrylat und Butylacrylat oder Dicarbonsäuremonoester wie Monobutylmaleat).

EP-A-185244 und EP-A-1247835 offenbaren nitrilgruppenhaltige Copolymere mit einpolymerisierten Carbonsäureestertermonomeren. Als Carbonsäureestermonomer wurde **Butylacrylat** und 2-Ethylhexyl-acrylat in Mengen von 5 bis 50 Gew.-% eingesetzt.

WO-A-11/141275 offenbart nitrilgruppenhaltigen Copolymere mit Hydroxyethylacrylat (HEA) oder Hydroxyethylmethacrylat (HEMA) als Hydroxyl-haltigem Termonomer. Die Menge an eingebautem Termonomer liegt im Bereich von 2,0 bis 4,8 Gew.-%.

EP-A-2471852 offenbart nitrilgruppenhaltigen Copolymere mit Glycidylmethacrylat als Epoxygruppen-haltigem Carbonsäureester Termonomer. Die Menge an eingebautem Termonomer beträgt 1,2 bis 7,2 Gew.-%.

Weiterhin bekannt sind Nitril-Dien-Carbonsäureester-Copolymere mit **PEG-Acrylateinheiten** als Termonomere.

EP-A-2868677 offenbart ein nitrilgruppenhaltiges Copolymer mit 1 bis 9 Gew.-% **Monocarbonsäuremonoestereinheiten** mit einer Glastemperatur von weniger als -20 °C und einer Ölquellung kleiner als 20 %. Darin werden explizit Terpolymere mit 4,8 Gew.-% und 7,7 Gew.-% **Methoxyethylacrylat,** d.h. PEG-1-Acrylat, bzw. mit 4,1 Gew.-% PEG-5-Methacrylat offenbart.

EP-A-2868676 offenbart ein nitrilgruppenhaltiges Copolymer- mit 1 bis 9 Gew.-% α,β-ethylenisch ungesättigten carbonylgruppenhaltigen Monomereinheiten. Als explizite Beispiele werden hydrierte Terpolymere mit PEG-11-funktionalisierten Methacrylsäure Monomeren offenbart.

EP-A-2392599 offenbart ein zumindest teilweise hydriertes Nitril-Butadien-Copolymer enthaltend 5 bis 60 Gew.-% α,β-ethylenisch ungesättigte Nitrileinheiten, 20 bis 83,9 Gew.-% konjugierte Dieneinheiten, 0,1 bis 20 Gew.-% Dicarbonsäuremonoestereinheiten, 11 bis 50 Gew.-% **Alkoxyalkyl(meth)acrylsäureestereinheiten** mit 2 bis 8 Kohlenstoffatomen. In Tabelle 2 werden unter anderem Quartärpolymere beschrieben mit einem Gehalt von 21,3 bzw. 24,8 Gew.-% Acrylnitril, 46,6 bzw. 47,3 Gew.-% Butadien, 4,5 bis 5 Gew.-% Mono-n-butyl-maleat und 23,0 bzw. 27,1 Gew.-% **Methoxyethylacrylat.**

JP-A-2012-031311 beschreibt einen nitrilgruppenhaltigen, hochgesättigten Copolymer-Kautschuk enthaltend (a) 10,0 bis 40,0 Gew.-% α,β-ethylenisch ungesättigte Nitrileinheiten, (b) 5,5 bis 10,0 Gew.-% α,β-ethylenisch ungesättigte **Dicarbonsäuremonoestereinheiten**, (c) 11,0 bis 30,0 Gew.-% **Alkoxyalkyl(meth)acrylateinheiten** mit Alkoxyalkyl-Gruppen mit 2 bis 8 Kohlenstoffatomen, und (d) 20,0 bis 73,5 Gew.-% konjugierte Dieneinheiten, wobei zumindest ein Teil der konjugierten Dieneinheiten hydriert ist.

EP-A-3196240 offenbart unhydrierte Nitril-Butadien-PEG-Acrylat-Copolymere, enthaltend 8,7 bis 22 Gew.-% Acrylnitril, 52,4 bis 61,9 Gew.-% Butadien und 10 bis 25 Gew.-% Ethoxytriethylenglycolmethacrylat (PEG-3-MA) bzw. Methoxyoctaethylenglycolmethacrylat (PEG-8-MA). Nitril-Dien-Carbonsäureester-Copolymere mit Butyldiglycolmethacrylat (BDGMA) sind nicht offenbart.

WO 02/02657 offenbart antistatische Polymere, Mischungen und Artikel aus solchen antistatischen Polymeren. Die WO 02/02657 offenbart in diesem Zusammenhang Polymere, umfassend: polymerisierte Einheiten von mindestens einem reaktiven Makromer von mindestens einem Alkylenoxid mit mindestens einer zur radikalischen Umwandlung befähigten funktionellen Gruppe, wobei das Makromer weniger als etwa 10 Gew.-% des Gesamtpolymergewichts umfasst und ein Molekulargewicht (Durchschnitt) von etwa 100 bis etwa 10.000 aufweist. Das Makromer hat dabei die Formel X- (Y-O)ₙZ, worin Y ein geradkettiger oder verzweigter Alkylenrest mit 1 bis 6 Kohlenstoffatomen ist. X ist eine funktionelle Gruppe, die zur Radikaltransformation fähig ist, Z ist H, oder CₘH₂ₘ, oder Phosphat, oder das gleiche wie X. m ist eine Variable von 1 bis 8, und n variiert, um das Molekulargewicht (Mittelwert) zu erreichen. WO 02/02657 offenbart keine Butoxydiethylenglycol(meth)acrylate oder Verwendungen dieser in Nitril-Dien-Carbonsäureester-Copolymeren.

Die Wahl des Monomers bzw. der Monomere sowie die Menge der eingesetzten Monomere hat entscheidenden Einfluss auf die Polymer- und Vulkanisateigenschaften und ist somit nicht ohne Weiteres vorhersagbar.

Die bisher bekannten Nitril-Butadien-Carbonsäureester-Copolymere, welche neben Nitrileinheiten und Dieneinheiten als Termonomereinheiten ausschließlich Monocarbonsäuren, Carbonsäureester wie Butylacrylat oder Monobutylmaleat, PEG-1-Acrylat oder geringe Menge an PEG-Acrylat enthalten, erfüllen die Anforderung einer niedrigen Glasübergangstemperatur und gleichzeitig einer niedrigen Quellung nicht zufriedenstellend.

Demgemäß lag eine Aufgabe der vorliegenden Erfindung in der Bereitstellung eines Nitril-Dien-Copolymers, welches in einem Vulkanisat gelichzeitig eine geringe Glasübergangstemperatur und eine geringe Quellung in Öl und Kraftstoff aufweist.

Eine weitere Aufgabe der vorliegenden Erfindung lag in der Bereitstellung eines Vulkanisats auf Basis eines Nitril-Dien-Copolymers, welches eine Glasübergangstemperatur von weniger als -40 °C aufweist und eine Quellung in Fuel C nach 3 Tagen bei 100 °C von weniger als 50% aufweist. Außerdem war es eine weitere Aufgabe, dass die dynamischen und mechanischen **Eigenschaften** des bereitgestellten HNBR-Copolymers ähnlich **ausgewogen** sind wie in bereits bekannten NBR-Polymeren.

Die **Lösung** der Aufgabe und Gegenstand der vorliegenden Erfindung ist nun ein Nitril-Dien-Carbonsäureester-Copolymer, enthaltend
(a) 15 bis 40 Gew.-% zumindest einer α,β-ethylenisch ungesättigten **Nitrileinheit,**
(b) 30 bis 65 Gew.-% zumindest einer konjugierten **Dieneinheit** und
(c) 20 bis 30 Gew.-% zumindest einer **PEG-Acrylateinheit**, (c) wobei die **PEG-Acrylateinheit (c)** Butoxypolyethylenglycol(meth)acrylat mit **2 Ethylenglycol-Wiederholungseinheiten** ist.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche, Restedefinitionen bzw. Verfahrensparameter umfasst.

Der Begriff "**Copolymer**" umfasst Polymere mit mehr als einer Monomereinheit.

In einer Ausführungsform der Erfindung ist das Copolymer beispielsweise ausschließlich abgeleitet von den drei Monomertypen (a), (b) und (c) und ist daher ein **Terpolymer.**

Ebenso umfasst vom Begriff Copolymer sind beispielsweise weiterhin **Quartärpolymere,** abgeleitet von den drei Monomertypen (a), (b) und (c) und einer weiteren α,β-ethylenisch ungesättigten Monomereinheit (d), die sich von der PEG-Acrylateinheit (c) unterscheidet.

Bei dem Begriff **"Nitril-Dien-Carbonsäureester-Copolymer"** handelt es sich im Rahmen dieser Erfindung um ein Copolymer enthaltend zumindest eine α,β-ethylenisch ungesättigte Nitrileinheit, zumindest eine konjugierte Dieneinheit und zumindest eine α,β-ethylenisch ungesättigten Carbonsäureestereinheit. Der Begriff umfasst somit auch Copolymere mit zwei oder mehr α,β-ethylenisch ungesättigten, unterschiedlichen Nitrilmonomereinheiten, zwei oder mehr unterschiedlichen konjugierten Dienmonomereinheiten und zwei oder mehr unterschiedlichen α,β-ethylenisch ungesättigten Carbonsäureestereinheiten.

### (a) α,β-ethylenisch ungesättigtes Nitril

Als **α,β-ethylenisch ungesättigtes Nitril,** das die **α,β-ethylenisch ungesättigten Nitrileinheiten** (a) bildet, kann jedes bekannte α,β-ethylenisch ungesättigte Nitril eingesetzt werden. Bevorzugt sind (C₃-C₅)-α,β-ethylenisch ungesättigte Nitrile wie Acrylnitril, α-Haloacrylnitril wie beispielsweise α-Chloracrylnitril und α-Bromacrylnitril, α-Alkylacrylnitril wie beispielsweise Methacrylnitril, Ethacrylnitril oder Mischungen aus zwei oder mehr α,β-ethylenisch ungesättigten Nitrilen. Besonders bevorzugt sind Acrylnitril, Methacrylnitril, Ethacrylnitril oder Mischungen davon. Ganz besonders bevorzugt ist Acrylnitril.

Die **Menge an α,β-ethylenisch ungesättigten Nitrileinheiten (a)** liegt im Bereich von 15 bis 40 Gew.-% bezogen auf die Gesamtmenge von 100 Gew.-% aller Monomereinheiten des Nitril-Dien-Carbonsäureester-Copolymers.

### (b) Konjugiertes Dien

Das **konjugierte Dien,** das die **konjugierten Dieneinheiten (b)** bildet, kann von jeder Natur sein, insbesondere konjugierte C₄-C₁₂-Diene. Besonders bevorzugt sind 1,3-Butadien, Isopren, 2,3-Dimethylbutadien, 1,3-Pentadien (Piperylen) oder Mischungen davon. Insbesondere bevorzugt sind 1,3-Butadien und Isopren oder Gemische daraus. Ganz besonders bevorzugt ist 1,3-Butadien.

Die **Menge an konjugiertem Dien** liegt im Bereich von 30 bis 65 Gew.-%, bezogen auf die Gesamtmenge von 100 Gew.-% aller Monomereinheiten des Nitril-Dien-Carbonsäureester-Copolymers.

### (c) α,β-ethylenisch ungesättigte Carbonsäureester

Zusätzlich zu den α,β-ethylenisch ungesättigten Nitrileinheiten und den konjugierten Dieneinheiten enthält das Nitril-Dien-Carbonsäureester-Copolymer als dritte Einheit zumindest eine **PEG-Acrylateinheit** (c) abgeleitet von der allgemeinen Formel (I) 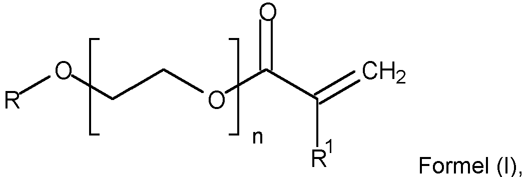 wobei
R gleich verzweigtes oder unverzweigtes C₁-C₂₀-Alkyl, bevorzugt C₂-C₂₀-Alkyl, besonders bevorzugt Ethyl, Butyl oder Ethylhexyl, ist,
n gleich 2 bis 12, bevorzugt 2 bis 8, besonders bevorzugt 2 bis 5 und ganz besonders bevorzugt 2 oder 3 ist und
R¹ gleich Wasserstoff oder Methyl ist,
wobei im Rahmen der Erfindung die **PEG-Acrylateinheit (c)** Butoxypolyethylenglycol(meth)acrylat mit **2 Ethylenglycol-Wiederholungseinheiten** ist.

Der Begriff "**(Meth)acrylat**" steht im Rahmen dieser Erfindung für "Acrylat" und "Methacrylat". Wenn der Rest R¹ der allgemeinen Formel (I) Methyl ist, so handelt es sich um ein Methacrylat.

Der Begriff "**Polyethylenglycol**" bzw. die Abkürzung "PEG" steht im Rahmen dieser Erfindung für Ethylenglycol-Abschnitte mit zwei Ethylenglycol-Wiederholungseinheit (PEG-2; n gleich 2) bis 12 Ethylenglycol-Wiederholungeinheiten (PEG-2 bis PEG-12; n gleich 2 bis 12).

Der Begriff "**PEG-Acrylat**" wird auch mit PEG-X-(M)A abgekürzt, wobei "X" für die Anzahl an Ethylenglycol-Wiederholungseinheiten steht, "MA" für Methacrylat steht und "A" für Acrylat steht.

Acrylateinheiten, abgeleitet von PEG-Acrylaten der allgemeinen Formel (I) werden im Rahmen dieser Erfindung als "**PEG-Acrylateinheit**" (c) bezeichnet. PEG-Acrylateinheiten der nachfolgenden Formeln Nr. 1 bis Nr. 8 sind beschrieben, wobei n gleich 2, 3, 4, 5, 6, 7, 8, 9, 10, 11 oder 12, bevorzugt 2, 3, 4, 5, 6, 7 oder 8, besonders bevorzugt 2, 3, 4 oder 5 und ganz besonders bevorzugt 2 oder 3 ist:

| | |
|---|---|
| Ethoxypolyethylenglycolacrylat (Formel Nr. 1) | 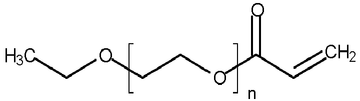 |
| Ethoxypolyethylenglycolmethacrylat (Formel Nr. 2) | 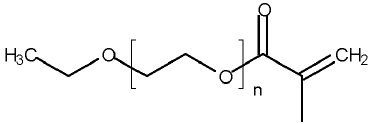 |
| Propoxypolyethylenglycolacrylat (Formel Nr. 3) | 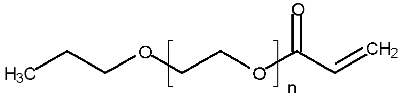 |
| Propoxypolyethylenglycolmethacrylat (Formel Nr. 4) | 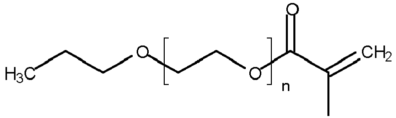 |
| Butoxypolyethylenglycolacrylat (Formel Nr. 5) | 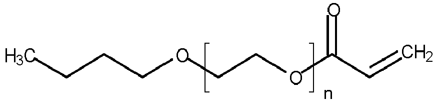 |
| Butoxypolyethylenglycolmeth acryl at (Formel Nr. 6) | 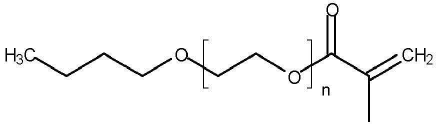 |
| Ethylhexyloxypolyethylenglycolacrylat (Formel Nr. 7) | 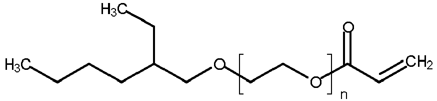 |
| Ethylhexyloxypolyethylenglycolmethacrylat (Formel Nr. 8) | 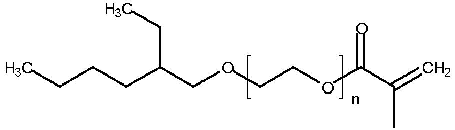 |

Andere gebräuchliche Bezeichnungen für Ethoxypolyethylenglycolacrylat (Formel Nr. 1) sind beispielsweise Poly(ethylenglycol)ethyletheracrylat, Ethoxy-PEG-acrylat, Ethoxypoly(ethylenglycol)monoacrylat oder Poly(ethylenglycol)monoethylether-monoacrylat.

Die am meisten bevorzugte Carbonsäureestereinheit (c) ist **Butoxydiethylenglycolmethacrylat** (Butyldiglycolmethacrylat, BDGMA).

Diese PEG-Acrylate können kommerziell erworben werden, beispielsweise bei Arkema unter dem Handelsnamen Sartomer^{®}, bei Evonik unter dem Handelsnamen Visiomer^{®} oder bei Sigma Aldrich.

Die **Menge** der PEG-Acrylateinheiten (c) liegt in erfindungsgemäßen Copolymeren im Bereich von 20 bis 30 Gew.-%, bezogen auf die Gesamtmenge von 100 Gew.-% aller Monomereinheiten.

### (d) α,β-ethylenisch ungesättigten Carbonsäureestereinheiten

In alternativen Ausführungsformen können die erfindungsgemäßen Nitril-Dien-Carbonsäureester-Copolymere weitere **α,β-ethylenisch ungesättigte Carbonsäureestereinheiten (d)** aufweisen, welche sich von den PEG-Acrylateinheiten (c) unterscheiden.

Typische α,β-ethylenisch ungesättigten Carbonsäureestereinheiten (d), welche sich von den PEG-Acrylateinheiten (c) unterscheiden sind
- **Alkyl-,** insbesondere C₁-C₁₈-Alkyl-, bevorzugt Methyl, Ethyl, Propyl, n-Butyl-, tert.-Butyl-, n-Pentyl- oder n-Hexyl(meth)acrylat;
- **Alkoxyalkyl-,** insbesondere C₄-C₁₈-Alkoxyalkyl-, bevorzugt C₄-C₁₂-Alkoxyalkyl(meth)acrylat;
- **Hydroxyalkyl-,** insbesondere C₄-C₁₈-Hydroxyalkyl-, bevorzugt C₄-C₁₂-Hydroxyalkyl(meth)acrylat;
- **Cycloalkyl-,** insbesondere C₅-C₁₈-Cycloalkyl-, bevorzugt C₆-C₁₂-Cycloalkyl, besonders bevorzugt Cyclopenty(meth)acrylat, Cyclohexyl(meth)acrylat, Cycloheptyl(meth)acrylat;
- **Alkylcycloalkyl-,** insbesondere C₆-C₁₂-Alkylcycloalkyl-, bevorzugt C₇-C₁₀-Alkylcycloalkyl, besonders bevorzugt Methylcyclopentyl(meth)acrylat und Ethylcyclohexyl(meth)acrylat;
- **Aryl-,** insbesondere C₆-C₁₄-Aryl-Monoester, bevorzugt Phenyl(meth)acrylat oder Benzyl(meth)acrylat;
- **aminogruppenhaltige** α,β-ethylenisch ungesättigte Carboxylsäureester wie beispielsweise Dimethylaminomethylacrylat oder Diethylaminoethylacrylat;
- **α,β-ethylenisch ungesättigte** Dicarbonsäuremonoalkylester, bevorzugt
   ∘ Alkyl-, insbesondere C₁-C₁₈-Alkyl-, bevorzugt Methyl, Ethyl, Propyl, n-Butyl-, tert.-Butyl-, n-Pentyl- oder n-Hexyl-, besonders bevorzugt Mono-n-butylmaleat, Mono-n-butylfumarat, Mono-n-butylcitraconat, Mono-n-butylitaconat, ganz besonders bevorzugt Mono-n-butylmaleat,
   ∘ Alkoxyalkyl-, insbesondere C₄-C₁₈-Alkoxyalkyl-, bevorzugt C₄-C₁₂-Alkoxyalkyl-,
   ∘ Hydroxyalkyl-, insbesondere C₄-C₁₈-Hydroxyalkyl-, bevorzugt C₄-C₁₂-Hydroxyalkyl-,
   ∘ Cycloalkyl-, insbesondere C₅-C₁₈-Cycloalkyl-, bevorzugt C₆-C₁₂-Cycloalkyl, besonders bevorzugt Monocyclopentylmaleat, Monocyclohexylmaleat, Monocycloheptylmaleat, Monocyclopentylfumarat, Monocyclohexylfumarat, Monocycloheptylfumarat, Monocyclopentylcitraconat, Monocyclohexylcitraconat, Monocycloheptylcitraconat, Monocyclopentylitaconat, Monocyclohexylitaconat und Monocycloheptylitaconat,
   ∘ Alkylcycloalkyl-, insbesondere C₆-C₁₂-Alkylcycloalkyl-, bevorzugt C₇-C₁₀-Alkylcycloalkyl, besonders bevorzugt Monomethylcyclopentylmaleat und Monoethylcyclohexylmaleat, Monomethylcyclopentylfumarat und Monoethylcyclohexylfumarat, Monomethylcyclopentylcitraconat und Monoethylcyclohexylcitraconat; Monomethylcyclopentylitaconat und Monoethylcyclohexylitaconat;
   ∘ Aryl-, insbesondere C₆-C₁₄-Aryl-Monoester, bevorzugt Maleinsäuremonoarylester, Fumarsäuremonoarylester, Citraconsäuremonoarylester oder Itaconsäuremonoarylester, besonders bevorzugt Monophenylmaleat oder Monobenzylmaleat, Monophenylfumarat oder Monobenzylfumarat, Monophenylcitraconat oder Monobenzylcitraconat, Monophenylitaconat oder Monobenzylitaconat,
   ∘ ungesättigte Polycarboxylsäurepolyalkylester wie beispielsweise Dimethylmaleat, Dimethylfumarat, Dimethylitaconat oder Diethylitaconat;
oder Mischungen davon.

### (e) Copolymerisierbare Monomere

Zusätzlich kann das Nitril-Dien-Carbonsäureester-Copolymer ein oder mehrere **weitere copolymerisierbare Monomere** (e) in einer Menge von 0 Gew.-% bis 20 Gew.-%, bevorzugt 0,1 Gew.-% bis 10 Gew.-% bezogen auf die Gesamtmenge von 100 Gew.-% aller Monomereinheiten enthalten. Die Mengen der übrigen Monomereinheiten (a), (b), (c) und gegebenenfalls (d) werden dann geeignet reduziert, so dass die Summe aller Monomereinheiten immer 100 Gew.-% ergibt. Das Nitril-Dien-Carbonsäureester-Copolymer kann als weitere copolymerisierbare Monomere (e) ein oder mehrere
- **aromatische Vinylmonomere,** bevorzugt Styrol, α-Methylstyrol und Vinylpyridin,
- **fluorhaltige Vinylmonomere,** bevorzugt Fluorethylvinylether, Fluorpropylvinylether, o-Fluormethylstyrol, Vinylpentafluorbenzoat, Difluorethylen und Tetrafluorethylen, oder auch
- **α-Olefine,** bevorzugt C₂-C₁₂-Olefine wie beispielsweise Ethylen, 1-Buten, 2-Buten, 4-Methyl-1-penten, 1-Hexen oder 1-Octen,
- **nicht-konjugierte Diene,** bevorzugt C₄-C₁₂-Diene wie 1,4-Pentadien, 1,4-Hexadien, 4-Cyanocyclohexen, 4-Vinylcyclohexen, Vinylnorbonen, Dicyclopentadien oder auch
- **Alkine** wie 1- oder 2-Butin,
- **α,β-ethylenisch ungesättigte Monocarbonsäuren,** bevorzugt Acrylsäure, Methacrylsäure, Crotonsäure oder Zimtsäure,
- **α,β-ethylenisch ungesättigte Dicarbonsäuren,** bevorzugt Maleinsäure, Fumarsäure, Citraconsäure, Itakonsäure,
- **copolymerisierbare Antioxidantien,** beispielsweise N-(4-Anilinphenyl)acrylamid, N-(4-Anilinphenyl)methacrylamid, N-(4-Anilinphenyl)cinnamamid, N-(4-Anilinphenyl)crotonamid, N-Phenyl-4-(3-vinylbenzyloxy)anilin, N-Phenyl-4-(4-vinylbenzyloxy)anilin oder
- **vernetzbare Monomere,** radikalisch polymerisierbare Verbindungen, die pro Molekül mindestens zwei olefinische Doppelbindungen enthalten, beispielsweise Divinyl-Komponenten wie beispielsweise Divinylbenzol oder Ethylenglykoldiacrylat, Diethylenglykoldimethacrylat und Triethylenglylkoldiacrylat;
enthalten.

Erfindungsgemäß enthält das erfindungsgemäße Nitril-Dien-Carbonsäureester-Copolymere als **PEG-Acrylateinheiten (c)** Butoxypolyethylenglycol(meth)acrylat mit **2** Ethylenglycol-Wiederholungseinheiten.

In einer alternativen Ausführungsform des Nitril-Dien-Carbonsäureester-Copolymers ist n gleich 2 oder 3, R gleich Ethyl oder Butyl und R¹ gleich Wasserstoff oder Methyl, bevorzugt n **gleich 2, R gleich Butyl und R¹ gleich Methyl.**

In einer alternativen Ausführungsform enthält das erfindungsgemäße Nitril-Dien-Carbonsäureester-Copolymer neben der α,β-ethylenisch ungesättigten Nitrileinheit (a), der konjugierten Dieneinheit (b) und der PEG-Acrylateinheit (c) als ungesättigte Carbonsäureestereinheit (d) eine α,β-ethylenisch ungesättigte Dicarbonsäuremonoalkylestereinheit, bevorzugt Monobutylmaleat.

In einer alternativen Ausführungsform des erfindungsgemäßen Nitril-Dien-Carbonsäureester-Copolymers ist die α,β-ethylenisch ungesättigte Nitrileinheit (a) abgeleitet von Acrylnitril oder Methacrylnitril, besonders bevorzugt von **Acrylnitril,** die konjugierte Dieneinheit (b) von Isopren oder 1,3-Butadien, besonders bevorzugt von **1,3-Butadien,** und die PEG-Acrylateinheit (c) wie vorstehend definiert.

In einer alternativen Ausführungsform des erfindungsgemäßen Nitril-Dien-Carbonsäureester-Copolymers ist die α,β-ethylenisch ungesättigte Nitrileinheit (a) abgeleitet von Acrylnitril oder Methacrylnitril, besonders bevorzugt von **Acrylnitril,** die konjugierte Dieneinheit (b) von Isopren oder 1,3-Butadien, besonders bevorzugt von **1,3-Butadien,** und die PEG-Acrylateinheit (c) wie vorstehend definiert, wobei keine weitere Carbonsäureestereinheit (d) vorliegt.

Erfindungsgemäß enthält das Nitril-Dien-Carbonsäureester-Copolymer
- 15 bis 40 Gew.-% α,β-ethylenisch ungesättigten Nitrileinheit (a), bevorzugt Acrylnitril,
- 30 bis 65 Gew.-% der konjugierten Dieneinheit (b), bevorzugt 1,3-Butadien, und
- 20 bis 30 Gew.-% Butoxydiethylenglycol(meth)acrylat.

In der am meisten bevorzugten Ausführungsform enthält das Nitril-Dien-Carbonsäureester-Copolymer 15 bis 40 Gew.-% Acrylnitrileinheiten, 30 bis 65 Gew.-% 1,3-Butadieneinheiten und 20 bis 30 Gew.-% Butoxydiethylenglycolmethacrylateinheiten. Das erfindungsgemäße Nitril-Dien-Carbonsäureester-Copolymer weist typischerweise ein Zahlenmittel des **Molekulargewichts (Mn)** von 5,000 g/mol bis 2,000,000 g/mol, bevorzugt 10,000 g/mol bis 1,000,000 g/mol, besonders bevorzugt 30,000 g/mol bis 500,000 g/mol und ganz besonders bevorzugt 40,000 g/mol bis 300,000 g/mol bezogen auf Polystyrol auf.

Das erfindungsgemäße Nitril-Dien-Carbonsäureester-Copolymer weist typischerweise einen **Polydispersitätsindex** (PDI = M_{w}/Mₙ, wobei M_{w} das Gewichtsmittel des Molekulargewichts darstellt) von 1,5 bis 6, bevorzugt 2 bis 5 und besonders bevorzugt 2,5 bis 4,5 auf.

Das erfindungsgemäße Nitril-Dien-Carbonsäureester-Copolymer weist typischerweise eine **Mooney Viskosität** (ML1+4@100°C) von 10 bis 150, bevorzugt von 20 bis 140 und besonders bevorzugt von 25 bis 120 auf.

### Verfahren zur Herstellung von unhydrierten Nitril-Dien-Carbonsäureester-Copolymeren

Beschrieben ist ferner ein Verfahren zur Herstellung von unhydrierten Nitril-Dien-Carbonsäureester-Copolymeren, dadurch gekennzeichnet, dass mindestens ein α,β-ethylenisch ungesättigtes Nitril, mindestens ein konjugiertes Dien und mindestens ein α,β-ethylenisch ungesättigter Carbonsäuremonoester einer Emulsionspolymerisation unterworfen werden.

Beschrieben ist ein Verfahren zur Herstellung von unhydrierten Nitril-Dien-Carbonsäureester-Copolymeren, dadurch gekennzeichnet, dass 5 **bis 80 Gew.-%,** bevorzugt 10 bis 60 Gew.-% und besonders bevorzugt 15 bis 40 Gew.-% zumindest eines α,β-ethylenisch ungesättigten **Nitrils, 10 bis 90 Gew.-%,** bevorzugt 20 bis 80 Gew.-% und besonders bevorzugt 30 bis 65 Gew.-% zumindest eines konjugierten **Diens** und 5 **bis 50 Gew.-%,** bevorzugt 10 bis 40 Gew.-% und besonders bevorzugt 20 bis 30 Gew.-% zumindest eines **α,β-ethylenisch ungesättigten Carbonsäureesters, PEG-Acrylat der allgemeinen Formel (I)** 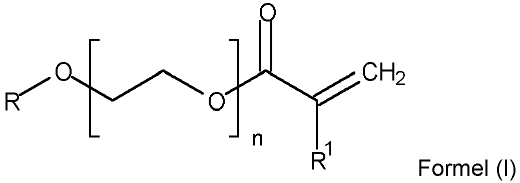 sind, wobei
- R: gleich verzweigtes oder unverzweigtes C₁-C₂₀-Alkyl, bevorzugt C₂-C₂₀-Alkyl, besonders bevorzugt Ethyl, Butyl oder Ethylhexyl, ist,
- n: gleich 2 bis 12, bevorzugt 2 bis 8, besonders bevorzugt 2 bis 5 und ganz besonders bevorzugt 2 oder 3 ist und
- R¹: gleich Wasserstoff oder Methyl ist,
einer Emulsionspolymerisation unterworfen werden.

Die Herstellung der unhydrierten Nitril-Dien-Carbonsäureester-Copolymeren kann durch Polymerisation der vorgenannten Monomere erfolgen und ist in der Literatur (z.B. Houben-Weyl, Methoden der Organischen Chemie Bd.14/1, 30 Georg Thieme Verlag Stuttgart 1961) umfangreich beschrieben und ist nicht im Besonderen beschränkt. Im Allgemeinen handelt es sich um ein Verfahren in dem α,β-ethylenisch ungesättigte Nitrileinheiten, konjugierte Dieneinheiten, und PEG-Acrylateinheiten nach Belieben copolymerisiert werden. Als Polymerisationsverfahren kann jedes bekannte Emulsions-Polymerisationsverfahren, Suspensions-Polymerisationsverfahren, Bulk-Polymerisationsverfahren und Lösungs-Polymerisationsverfahren verwendet werden. Bevorzugt ist dabei das Emulsions-Polymerisationsverfahren. Unter Emulsionspolymerisation wird insbesondere ein an sich bekanntes Verfahren verstanden, bei dem als Reaktionsmedium meist Wasser verwendet wird (siehe u. a. Römpp Lexikon der Chemie, Band 2, 10. Auflage 1997; P. A. Lovell, M. S. EI-Aasser, Emulsion Polymerization and Emulsion Polymers, John Wiley & Sons, ISBN: 0471 96746 7; H. Gerrens, Fortschr. Hochpolym. Forsch. 1, 234 (1959)). Die Einbaurate des Termonomers kann durch den Fachmann ohne weiteres so eingestellt werden, dass ein erfindungsgemäßes Terpolymer erhalten wird. Die Monomere können vorgelegt werden bzw. durch Inkrementierung in mehreren Schritten umgesetzt werden.

Die Polymerisation kann entweder diskontinuierlich oder auch kontinuierlich in einer Rührkesselkaskade durchgeführt werden.

Ferner wird häufig in Gegenwart sogenannter **Molekulargewichtsregler** polymerisiert, um das Molekulargewicht zu regeln. Es handelt sich in der Regel um Alkylthiole, die 9-16 Kohlenstoffatome enthalten. Solche Alkylthiole bzw. (Isomeren)-Mischungen von Alkylthiolen sind entweder käuflich erhältlich oder aber nach Verfahren, die in der Literatur hinlänglich beschrieben sind, für den Fachmann herstellbar.

Beschrieben ist auch der Nitril-Dien-Carbonsäureester-Copolymer-Latex, optional enthaltend einen phenolischen, aminischen und auch sonstigen Alterungsschutzmittel, enthaltend das erfindungsgemäße Nitril-Dien-Carbonsäureester-Copolymer. Nitril-Dien-Carbonsäureester-Copolymer-Latex dient als Zwischenstufe zur Herstellung von Nitril-Dien-Carbonsäureester-Copolymer-Latex als Festkautschuk.

Vor oder bei der Latexkoagulation können dem Latex ein oder mehrere Alterungsschutzmittel zugesetzt werden. Hierfür eigenen sich phenolische, aminische und auch sonstige Alterungsschutzmittel.

Für die Koagulation wird der Latex auf einen für den Fachmann bekannten pH-Wert und zwar durch Zusatz einer Base, bevorzugt Ammoniak oder Natrium- oder Kaliumhydroxid, oder einer Säure, bevorzugt Schwefelsäure oder Essigsäure, eingestellt.

In einer Ausführungsform des Verfahrens wird die Koagulation unter Einsatz mindestens eines Salzes ausgewählt aus der Gruppe bestehend aus Aluminium-, Calcium-, Magnesium-, Natrium-, Kalium- und Lithium-Salzen durchgeführt. Als Anionen dieser Salze werden üblicherweise ein- oder zweiwertige Anionen eingesetzt. Bevorzugt sind Halogenide, besonders bevorzugt Chlorid, Nitrat, Sulfat, Hydrogencarbonat, Carbonat, Formiat und Acetat.

Die Salze werden in einer Menge von 0,05 bis 10 Gew%, bevorzugt 0,1 bis 8 Gew%, besonders bevorzugt 0,2 bis 5 Gew%, bezogen auf den Feststoffgehalt der Latexdispersion zugegeben

Neben mindestens einem Salz aus der oben definierten Gruppe können bei der Koagulation auch Fällhilfsmittel eingesetzt werden. Als Fällhilfsmittel kommen beispielsweise wasserlöslichen Polymere in Frage. Diese sind nichtionisch, anionisch oder kationisch.

Der zur Koagulation eingesetzte Latex besitzt zweckmäßigerweise eine Feststoffkonzentration im Bereich von 1 % bis 40 %, vorzugsweise im Bereich von 5 % bis 35 % und besonders bevorzugt im Bereich von 15 bis 30 Gew. %.

Die Latexkoagulation wird im Temperaturbereich von 10 bis 110°C durchgeführt, vorzugsweise von 20 bis 100°C, besonders bevorzugt 50 bis 98°C. Die Latexkoagulation kann kontinuierlich oder diskontinuierlich erfolgen, bevorzugt wird kontinuierlich gearbeitet.

In einer alternativen Ausführungsform kann der üblicherweise von nicht umgesetzten Monomeren abgetrennte Latex auch mit Säuren in einem pH-Bereich von ≤ 6, bevorzugt ≤ 4, besonders bevorzugt 2, behandelt werden, wodurch das Polymer ausfällt. Zur Fällung können alle mineralischen und organischen Säuren verwendet werden, die es gestatten die gewählten pH-Bereiche einzustellen. Mineralische Säuren werden bevorzugt zur pH-Einstellung verwendet. Anschließend wird das Polymer in der dem Fachmann üblichen Weise von der Suspension abgetrennt. Auch dies kann kontinuierlich oder diskontinuierlich erfolgen, bevorzugt wird kontinuierlich gearbeitet.

Nach der Koagulation liegt der Nitrilkautschuk üblicherweise in Form sogenannter Krümel vor. Die Wäsche des koagulierten NBR wird daher auch als Krümelwäsche bezeichnet. Für diese Wäsche kann entweder entionisiertes Wasser oder nicht entionisiertes Wasser eingesetzt werden. Die Wäsche wird bei einer Temperatur im Bereich von 15 bis 90°C durchgeführt, bevorzugt bei einer Temperatur im Bereich von 20 bis 80°C. Die Menge des Waschwassers beträgt 0,5 bis 20 Gew.-Teile, bevorzugt 1 bis 10 Gew.-Teile und besonders bevorzugt 1 bis 5 Gew.-Teile bezogen auf 100 Gew.-Teile Nitrilkautschuk. Bevorzugterweise werden die Kautschukkrümel einer mehrstufigen Wäsche unterworfen, wobei die Kautschukkrümel zwischen den einzelnen Waschstufen teilweise entwässert werden. Die Restfeuchten der Krümel zwischen den einzelnen Waschstufen liegen im Bereich von 5 bis 50 Gew.%, vorzugsweise im Bereich von 7 bis 25 Gew. %. Die Zahl der Waschstufen liegt üblicherweise bei 1 bis 7, vorzugsweise bei 1 bis 3. Die Wäsche wird diskontinuierlich oder kontinuierlich durchgeführt. Vorzugsweise verwendet man ein mehrstufiges, kontinuierliches Verfahren, wobei für den schonenden Umgang mit Wasser eine Gegenstromwäsche bevorzugt ist. Nach Abschluss der Wäsche hat es sich bewährt, die Nitrilkautschuk-Krümel zu entwässern. Die Trocknung des vorentwässerten Nitrilkautschuks erfolgt in einem Trockner, geeignet sind beispielsweise Fließbetttrockner oder Plattentrockner. Die Temperaturen bei der Trocknung liegen bei 80 bis 150°C. Bevorzugt ist eine Trocknung mit Temperaturprogramm, wobei gegen Ende des Trockenprozesses die Temperatur abgesenkt wird.

### Metathese und/oder Hydrierung

Es ist auch möglich, dass sich an die Herstellung des unhydrierten Nitril-Dien-Carbonsäureester-Copolymers eine Metathese-Reaktion zur Reduktion des Molekulargewichts des Nitril-Dien-Carbonsäureester-Copolymers oder eine Metathese-Reaktion und eine nachfolgende Hydrierung oder nur eine Hydrierung anschließt. Diese Metathese- bzw. Hydrierungsreaktionen sind bei dem Fachmann hinlänglich bekannt und in der Literatur beschrieben.

Die **Metathese** ist beispielsweise aus WO-A-02/100941 sowie der WO-A-02/100905 bekannt und kann zum Molekulargewichtsabbau eingesetzt werden.

Die **Hydrierung** von Nitril-Dien-Copolymeren ist bekannt, beispielsweise aus US-A-3 700 637, DE-A-2 539 132, DE-A-3 046 008, DE-A-3 046 251, DE-A-3 227 650, DE-A-3 329 974, EP-A-111 412, FR-B 2 540 503. Hydrierte Nitril-Dien-Copolymere zeichnen sich durch hohe Reißfestigkeit, geringen Abrieb, niedrige bleibende Verformung nach Druck-und Zugbeanspruchung und gute Ölbeständigkeit, vor allem aber durch bemerkenswerte Stabilität gegen thermische und oxidative Einflüsse aus.

Beschrieben ist ferner ein hydriertes Nitril-Dien-Carbonsäureester-Copolymer auf Basis des erfindungsgemäßen Nitril-Dien-Carbonsäureester-Copolymers. Hydriertes Nitril-Dien-Carbonsäureester-Copolymer ist erhältlich aus der Hydrierung von erfindungsgemäßem Nitril-Dien-Carbonsäureester-Copolymer. Bevorzugt ist hydrierter Nitril-Dien-Copolymerkautschuk mit 15 bis 40 Gew.-% Acrylnitrileinheiten, 20 bis 30 Gew.-% Butyldiglycolmethacrylat und 30 bis 65 Gew.-%, ganz oder teilweise hydriertes, Butadien.

Der Begriff **"hydriert"** beschreibt, dass der Grad der Hydrierung der Butadieneinheiten im hydrierten Nitril-Dien-Carbonsäureester-Copolymer und beträgt 50 % bis 100 %, bevorzugt 90 % bis 100 %, besonders bevorzugt 95 % bis 100 % und ganz besonders bevorzugt zu 99 % bis 100 %.

### Vulkanisierbare Zusammensetzungen enthaltend Nitril-Dien-Carbonsäureester-Copolymere

Gegenstand der vorliegenden Erfindung sind ferner **vulkanisierbare Zusammensetzungen** enthaltend zumindest ein erfindungsgemäßes Nitril-Dien-Carbonsäureester-Copolymer und mindestens einen **Vernetzer.**

In einer bevorzugten Ausführungsform handelt es sich um vulkanisierbare Zusammensetzungen, enthaltend zumindest ein erfindungsgemäßes Nitril-Dien-Carbonsäureester-Copolymer, mindestens einen **Vernetzer** und zusätzlich mindestens einen **Füllstoff** enthalten.

Als **Vernetzer** kommen beispielsweise **peroxidische Vernetzer** in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyl-trimellithat, Ethylenglycoldimethacrylat, Butandioldimethacrylat, Trimethylolpropantrimethacrylat, Zn-diacrylat, Zn-dimethacrylat, 1,2-Polybutadien oder N,N-'m-Phenylendimaleinimid geeignet.

Die Gesamtmenge des oder der Vernetzer liegt üblicherweise im Bereich von 1 bis 20 phr, bevorzugt im Bereich von 1,5 bis 15 phr und besonders bevorzugt im Bereich von 2 bis 10 phr, bezogen auf den Nitrilkautschuk.

Als Vernetzer können auch **Schwefel** in elementarer löslicher oder unlöslicher Form oder **Schwefelspender** eingesetzt werden.

Als **Schwefelspender** kommen beispielsweise Dimorpholyldisulfid (DTDM), 2-Morpholino-dithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen Nitrilkautschuke aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als **Dithiocarbamate** können beispielsweise eingesetzt werden: Ammoniumdimethyldithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithio-carbamat (ZBEC), Zinkpentamethylendithiocarbamat (Z5MC), Tellurdiethyldithiocarbamat, Nickeldibutyldithiocarbamat, Nickeldimethyldithiocarbamat und Zinkdiisononyldithiocarbamat.

Als **Thiurame** können z.B. Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuram-tetrasulfid oder Tetraethylthiuramdisulfid (TETD) eingesetzt werden.

Als **Thiazole** können z.B. 2-Mercaptobenzothiazol (MBT), Dibenzthiazyldisulfid (MBTS), Zinkmercaptobenzothiazol (ZMBT) oder Kupfer-2-mercaptobenzothiazol eingesetzt werden.

Als **Sulfenamidderivate** können z.B. N-Cyclohexyl-2-benzothiazylsulfenamid (CBS), N-tert.-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert.butylsulfenamid oder Oxydiethylenthiocarbamyl-N-oxyethylensulfenamid eingesetzt werden.

Als **Xanthogenate** können z.B. Natriumdibutylxanthogenat, Zinkisopropyldibutylxanthogenat oder Zinkdibutylxanthogenat eingesetzt werden.

Als **Guanidinderivate** können z.B. Diphenylguanidin (DPG), Di-o-tolylguanidin (DOTG) oder o-Tolylbiguanid (OTBG) eingesetzt werden.

Als **Dithiophosphate** können z.B. Zinkdialkydithiophosphate (Kettenlänge der Alkylreste C2 bis C16), Kupferdialkyldithiophosphate (Kettenlänge der Alkylreste C2 bis C16) oder Dithiophoshorylpolysulfid eingesetzt werden.

Als **Caprolactam** kann beispielsweise Dithio-bis-caprolactam eingesetzt werden.

Als **Thioharnstoffderivate** können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise Zinkdiamindiisocyanat, Hexamethylentetramin, 1,3-Bis(citraconimidomethyl)benzol sowie zyklische Disulfane.

Die genannten Zusätze und Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkyldithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithio-bis-caprolactam.

Die Vernetzungsmittel und zuvor genannten Zusätze können jeweils in **Mengen** von ca. 0,05 bis 10 phr, vorzugsweise 0,1 bis 8 phr, insbesondere 0,5 bis 5 phr (Einzeldosierung, jeweils bezogen auf die Wirksubstanz) eingesetzt werden.

Bei der erfindungsgemäßen Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, wie Zinkoxid, Zinkcarbonat, Bleioxid, Magnesiumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Daneben können auch **Anvulkanisationsverzögerer** eingesetzt werden. Hierzu gehören Cyclohexylthiophthalimid (CTP), N,N' Dinitrosopentamethlyentetramin (DNPT), Phthalsäure-anhydrid (PTA) und Diphenylnitrosamin. Bevorzugt ist Cyclohexylthiophthalimid (CTP).

Neben der Zugabe des oder der Vernetzer kann der erfindungsgemäße Nitrilkautschuk auch mit weiteren üblichen **Kautschukadditiven** gemischt werden.

Diese umfassen z.B. die typischen und dem Fachmann bekannten Substanzen wie Füllstoffe, Füllstoffaktivatoren, Ozonschutzmittel, Alterungsschutzmittel, Antioxidationsmittel, Verarbeitungshilfsmittel, Extenderöle, Weichmacher, Verstärkungsmaterialien und Formtrennmittel.

Als **Füllstoffe** können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform), oder Silikate eingesetzt werden.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekular-gewichten von 74 bis 10 000 g/mol dar. Die Menge an Füllstoffaktivatoren beträgt üblicherweise 0 bis 10 phr, bezogen auf 100 phr des Nitrilkautschuks.

Als **Alterungsschutzmittel** können den vulkanisierbaren Mischungen diejenigen zugesetzt werden, die bereits im Zusammenhang mit der Latexkoagulation in dieser Anmeldung beschrieben werden. Sie werden üblicherweise in Mengen von ca. 0 bis 5 phr, bevorzugt 0,5 bis 3 phr, bezogen auf 100 phr des Nitrilkautschuks eingesetzt.

Als **Formtrennmittel** kommen z.B. gesättigte oder teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen in Betracht.

Die Formtrennmittel werden als Mischungsbestandteil in Mengen von ca. 0 bis 10 phr, bevorzugt 0,5 bis 5 phr, bezogen auf 100 phr des Nitrilkautschuks eingesetzt.

Auch die **Verstärkung** mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon^{®}, Aramid^{®}), Polyestern und Naturfaserprodukten.

### Verfahren zur Herstellung einer vulkanisierbaren Zusammensetzung enthaltend Nitril-Dien-Carbonsäureester-Copolymere

Gegenstand der Erfindung ist ferner ein Verfahren zur Herstellung vulkanisierbarer Zusammensetzungen enthaltend Nitril-Dien-Carbonsäureester-Copolymere durch Mischung des Nitril-Dien-Carbonsäureester-Copolymers mit mindestens einem Vernetzer und den optional weiteren enthaltenen Komponenten. Dieser Mischvorgang kann in allen in der Gummiindustrie üblichen Mischaggregaten, wie z.B. Innenmischern, Banbury Mischern oder Walzen, durchgeführt werden. Die Reihenfolge der Zudosierung ist für den Fachmann durch geeignete Versuche ohne Probleme ermittelbar.

Beispielhaft sind nachfolgend zwei Varianten dargestellt, wie vorgegangen werden kann:

### Verfahren A: Herstellung im Innenmischer

Bevorzugt sind Innenmischer mit ineinandergreifender Rotorgeometrie.

Zum Startzeitpunkt erfolgt die Beschickung des Innenmischers mit dem in Ballenform vorliegenden Nitril-Dien-Carbonsäureester-Copolymer und es kommt zur Zerkleinerung der Ballen. Nach einem geeigneten Mischzeitraum erfolgt die Zugabe der Füllstoffe und Additive. Das Mischen erfolgt unter Kontrolle der Temperatur mit der Maßgabe, dass das Mischgut für eine geeignete Zeit bei einer Temperatur im Bereich von 80 °C bis 150 °C verbleibt. Nach einem weiteren geeigneten Mischzeitraum erfolgt die Zugabe der weiteren Zusammensetzungsbestandteile wie optional Stearinsäure, Antioxidantien, Weichmacher, Weißpigmente (beispielsweise Titandioxid), Farbstoffen und sonstigen Verarbeitungswirkstoffen. Nach einem weiteren geeigneten Mischzeitraum wird der Innenmischer gelüftet und der Schacht gereinigt. Nach einem weiteren geeigneten Zeitraum wird der Innenmischer unter Erhalt der vulkanisierbaren Zusammensetzung entleert. Unter geeigneten Zeiträumen sind einige Sekunden bis einige Minuten zu verstehen. Die Vernetzungschemikalien können entweder in einem separaten Schritt auf der Walze eingemischt werden, vor allem wenn bei erhöhter Mischtemperatur gemischt wird oder direkt im Innenmischer mit hinzugegeben werden. Hierbei ist darauf zu achten, dass die Mischtemperatur unterhalb der Reaktionstemperatur der Vernetzungschemikalien liegt.

Die so hergestellten vulkanisierbaren Zusammensetzungen können in üblicher Weise, etwa durch die Mooney-Viskosität, durch Mooney-Scorch oder durch einen Rheometertest beurteilt werden.

### Verfahren B: Herstellung auf der Walze

Werden Walzen als Mischaggregate verwendet, wird zuerst das Nitril-Dien-Carbonsäure Copolymer auf die Walze gegeben. Nachdem sich ein homogenes Walzfell gebildet hat werden die Füllstoffe, Weichmacher und andere Additive außer den Vernetzungschemikalien zugegeben. Nach Einmischung aller Komponenten werden die Vernetzungschemikalien zugegeben und eingemischt. Danach wird die Mischung je dreimal rechts und dreimal links eingeschnitten und 5 mal gestürzt. Das fertige Walzfell wird auf die gewünschte Dicke gewalzt und entsprechend der gewünschten Testmethoden weiterverarbeitet..

### Verfahren zur Herstellung von Vulkanisaten enthaltend Nitril-Dien-Carbonsäureester-Copolymere

Gegenstand der Erfindung ist ferner das **Verfahren zur Herstellung von Vulkanisaten,** bevorzugt als Formteile, enthaltend Nitril-Dien-Carbonsäureester-Copolymere **(Vulkanisation),** dadurch gekennzeichnet, dass man die vulkanisierbare Zusammensetzung enthaltend Nitril-Dien-Carbonsäureester-Copolymere einer Vulkanisation unterwirft, bevorzugt in einem Formgebungsverfahren und ferner bevorzugt bei Temperaturen im Bereich von 100 °C bis 250 °C, besonders bevorzugt bei Temperaturen im Bereich von 120 °C bis 250 °C und ganz besonders bevorzugt Temperaturen im Bereich von 130 °C bis 250 °C. Die vulkanisierbaren Zusammensetzungen werden hierzu mit Kalandern, Walzen oder Extrudern weiterverarbeitet. Die vorgeformte/plastifizierte Masse wird sodann in Pressen, Autoklaven, Heißluft-, Salzbad-, Infrarot-, UHF-Anlagen oder in sogenannten automatischen Mattenvulkanisationsanlagen ("Auma") vulkanisiert, wobei sich bevorzugt Temperaturen im Bereich von 100 °C bis 250 °C, besonders bevorzugt Temperaturen im Bereich von 120 °C bis 250 °C und ganz besonders bevorzugt Temperaturen im Bereich von 130 °C bis 250 °C bewährt haben. Die Vulkanisationszeit beträgt typischerweise 1 Minute bis 24 Stunden und bevorzugt 2 Minuten bis 1 Stunde. Abhängig von der Form und der Größe der Vulkanisate kann eine zweite Vulkanisation durch erneutes Erhitzen notwendig sein, um eine vollständige Vulkanisation zu erreichen.

Gegenstand der Erfindung sind ferner die so erhältlichen **Vulkanisate** basierend auf erfindungsgemäßen Nitril-Dien-Carbonsäureester-Copolymeren.

Beschrieben ist auch die **Verwendung** der Vulkanisate basierend auf erfindungsgemäßen Nitril-Dien-Carbonsäureester-Copolymeren zur Herstellung von elastomeren Bauteilen ausgewählt aus der Gruppe bestehend aus Riemen, Dichtungen und Dichtprofilen, Walzen, Membranen, Schuhkomponenten, Schläuchen, Dämpfungselementen, Dämmstoffen, Statoren und Kabelmänteln, bevorzugt Schläuche und Dichtungen.

Beschrieben sind somit Vulkanisate als **Formteile** basierend auf erfindungsgemäßem Nitril-Dien-Carbonsäureester-Copolymeren, die bevorzugt ausgewählt sind aus Riemen, Dichtungen und Dichtprofilen, Walzen, Membranen, Schuhkomponenten, Schläuchen, Dämpfungselementen, Dämmstoffen, Statoren und Kabelmänteln, bevorzugt Schläuche und Dichtungen. Die hierfür beispielsweise einsetzbaren Methoden wie Molding, Spritzguss- oder Extrusionsverfahren sowie die entsprechende Spritzgießvorrichtungen oder Extruder sind dem Fachmann hinlänglich bekannt. Bei der Herstellung dieser Formteile können den erfindungsgemäßen Nitril-Dien-Carbonsäureester-Copolymeren noch die gängigen, dem Fachmann bekannten und von ihm mit üblichem Fachwissen geeignet auszuwählenden Hilfsmittel wie z.B. Füllstoffe, Füllstoffaktivatoren, Beschleuniger, Vernetzer, Ozonschutzmittel, Antioxidationsmittel, Verarbeitungsöle, Extenderöle, Weichmacher, Aktivatoren oder Anvulkanisationshemmer zugesetzt werden.

Der **Vorteil** der Erfindung liegt insbesondere darin, dass die erfindungsgemäßen, Nitril-Dien-Carbonsäureester-Copolymere zur Herstellung von Vulkanisaten geeignet sind, die eine geringe Quellung und gleichzeitig eine gute Kälteflexibilität aufweisen und somit den Vulkanisaten auf Basis der bekannten NBR-Copolymeren überlegen sind.

### Beispiele:

### Messverfahren:

Die Bestimmung der Werte für die **Mooney-Viskosität** (ML 1+4@100°C) erfolgt jeweils mittels eines Scherscheibenviskosimeters nach DIN 53523/3 bzw. ASTM D 1646 bei 100°C.

Der **Stickstoffgehalt** zur Bestimmung des ACN-Gehalts wird in den nitrilgruppenhaltigen Copolymerkautschuken nach Vario EL cube bestimmt. Verbrennung der Einwaage im CHN-Automaten bei etwa 1150 °C in Gegenwart von Oxidationskatalysatoren und Sauerstoff, Aliquotierung der Verbrennungsgase, Absorption der Störkomponenten und Detektion von N₂ durch Wärmeleitfähigkeitsmesszelle (WLD).

Die **Bestimmung der Mikrostruktur und des Termonomergehaltes** der einzelnen Polymere erfolgte mittels ¹H-NMR (Gerät: Bruker DPX400 mit Software TopSpin 1.3, Messfrequenz 400 MHz, Lösungsmittel 1,1,2,2-Tetrachlorethan-d2).

Die **Vernetzungsdichte** wurde mit einem Moving Die Rheometer (MDR 2000E) bestimmt, wobei mit einem Winkel von 0,5° und einer Oszillationsfrequenz von 1,7 Hz bei 160 °C für 30 Minuten gemessen wurde.

Für die **Zugprüfung** wurden 2 mm Platten durch Vulkanisation der vulkanisierbaren Mischung bei 180 °C hergestellt. Aus diesen Platten wurden die hantelförmigen Prüfkörper ausgestanzt und nach ASTM D2240-81 die Zugfestigkeit und Dehnung bestimmt.

Die **Härte** wurde mit einem Durometer nach ASTM D2240-81 bestimmt.

Die **Glasübergangstemperatur** wurde mit Hilfe einer **DSC Messung** nach ASTM E 1356-03 bzw. nach DIN 11357-2 erhalten. Dafür wurden zwischen 10 mg und 15 mg der Probe in ein Aluminiumpfännchen eingewogen und versiegelt. Das Pfännchen wurde in einem DSC Gerät von TA Instruments mit einer Heizrate von 20 K/min zweimal von -150 °C auf 150 °C aufgeheizt. Die Glasübergangstemperatur wurde aus der zweiten Aufheizkurve nach dem Standard Mittelwertverfahren bestimmt.

**TR 10 Messung:** Die TR Messung wurde nach ISO 2921, 2005 durchgeführt. Hierfür wurde die Probe bei -70 °C in Silikonöl für 10 Minuten gelagert. Anschließend wurde die Kurve mit 1°C/min aufgezeichnet und die Temperatur für 10 % Veränderung abgelesen.

Quellung: Hantelförmige Probekörper, wie sie für die Zugprüfung verwendet werden, wurden zur Bestimmung der Quellung bei 100 °C für 72 h bzw. 168h in IRM903 oder Fuel C nach DIN ISO 1817 gelagert. Im Anschluss wurden die Proben ausgemessen und ausgewogen und die Volumenquellung und Massezunahme bestimmt. Daran anschließend wurden die Zugfestigkeit und Dehnung nach ASTM D2240-81 bestimmt.

Die in den nachfolgenden Tabellen angegebenen Abkürzungen haben folgende Bedeutungen:
**"RT"** Raumtemperatur (23±2 °C)
**"S min"** ist das minimale Drehmoment der Vernetzungsisotherme
**"S max"** ist das maximale Drehmoment der Vernetzungsisotherme
**"Delta S"** ist "S max - S min"
**"TS1"** steht für die Zeit, bis die Mooney-Viskosität sich um eine Einheit erhöht hat nachdem das Mooney-Viskositäts-Minimum erreicht wurde, im Vergleich zum Ausgangspunkt
**"TS2"** steht für die Zeit, bis die Mooney-Viskosität sich um zwei Einheiten erhöht hat nachdem das Mooney-Viskositäts-Minimum erreicht wurde, im Vergleich zum Ausgangspunkt
**"t 50"** ist die Zeit, wenn 50 % von S max erreicht wurde
**"t 90"** ist die Zeit, wenn 90 % von S max erreicht wurde
**"t 95"** ist die Zeit, wenn 95 % von S max erreicht wurde
**"M 10"** Modul bei 10 % Dehnung, gemessen bei RT
**"M 25"** Modul bei 25 % Dehnung, gemessen bei RT
**"M 50"** Modul bei 50 % Dehnung, gemessen bei RT
"**M 100"** Modul bei 100 % Dehnung, gemessen bei RT
**"M** 300" Modul bei 300 % Dehnung, gemessen bei RT
**"EB"** elongation at break (engl.), Bruchdehnung, gemessen bei RT
**"TS"** Tensile strength (engl.), Zugspannung, gemessen bei RT
**"H"** Hardness (engl.), Härte, gemessen bei RT

### Folgende Substanzen wurden in den Beispielen eingesetzt:

Die nachfolgenden Chemikalien wurden als Handelsprodukte der jeweils angegebenen Firmen bezogen oder stammen aus Produktionsanlagen der angegebenen Firmen.

### Für die Polymerisation:

- **ACN**: Acrylnitril, CAS 107-13-1
- **BD**: 1,3-Butadien, CAS 106-99-0
- **BA**: Butylacrylat, CAS 141-32-2
- **PEG-2-MA**: Butoxydiethylenglycolmethacrylat (BDGMA), CAS 7328-22-5
- **Natriumdodecylsulfa**t **(SDS)**: CAS 151-21-3
- **Na-Salz der disproportionierten Harzsäure**: CAS 61790-51-0
- **Fettsäure**: CAS 67701-08-8
- **Na₂CO₃**: CAS 24551-51-7
- **t-DDM**: tertiäres Dodecylmercaptan; LANXESS Deutschland GmbH
- **Glidox^{®} 500**: Pinanhydroperoxid; Renessenz
- **"Prämix-Lösung Fe(II)SO₄"**: enthält 0,986 g **Fe(II)SO₄*7** H₂O und 2,0 g Rongalit^{®} C in 400 g Wasser
- **Rongalit C^{®}**: Natriumsalz eines Sulfinsäurederivates; Handelsprodukt der BASF
- **Diethylhydroxylamin**: CAS 3710-84-7
- **Vulkanox^{®} BKF**: 2,2'-Methylen-bis-(4-methyl-6-*tert*-butyl-phenol); LANXESS Deutschland GmbH

### In der vulkanisierbaren Zusammensetzung verwendeten Substanzen:

- **NBR 5**: PERBUNAN^{®} 2255VP, 22,1 Gew.-% ACN; Mooney Viskosität 55 Mu
- **NBR 6**: PERBUNAN^{®} 2845 F, 28,2 Gew.-% ACN; Mooney Viskosität 43 Mu
- **NBR 7**: PERBUNAN^{®} 3445 F, 34,2 Gew.-% ACN; Mooney Viskosität 43 Mu
- **Corax^{®} N550/30**: Ruß; Orion Engineered Carbons
- **REGAL^{®} SRF / N772**: Ruß; Carbot
- **VULKANOL^{®} OT**: 2-[2-(Butoxyethoxy)-ethoxy]ethanol mit 2,2'-Thiobis-(ethanol) (LANXESS)
- **EDENOR^{®} C18-98 MY**: Stearinsäure (Oleo Sultions Ltd.)
- **VULKANOX^{®} HS/LG**: 2,2,4-Trimethyl-1,2-dihydrochinolin (LANXESS)
- **VULKANOX^{®} MB2/MG**: 4/5-Methyl-2-mercaptobenzimidazol (LANXESS)
- **RHENOCURE^{®} IS 90-20**: unlöslicher/löslicher Schwefel in einem 90:10 Verhältnis plus 20% Mineralöl (LANXESS)
- **ZINKOXYD AKTIV**: ZnO (LANXESS)
- **VULKACIT^{®} NZ/EGC**: N-tert-butyl-benzo-thiazyl sulfenamid (TBBS) (LANXESS)
- **VULKACIT^{®} THIURAM/C**: Tetramethylthiuram disulfide (LANXESS)
- **VULKALENT^{®} E/C**: N-Phenyl-N-(trichloromethylsulfenyl)-benzenesulfonamide (LANXESS)
- **Stabilisator**: Mischung aus 2,2'-Methylene-bis(4-methyl-6-nonyl)phenol (CAS 7786-17-6) und styrolisiertes Diphenylamin (CAS 68442-68-2)

### I Herstellung der unhydrierten Nitril-Dien-Carbonsäureester-Copolymere (NBR-Carbonsäureester 1 - 4)

Die Herstellung der in den folgenden Beispielserien eingesetzten NBR-Carbonsäureester-Copolymere 1 bis 4 erfolgte nach der in Tabelle 1 angegebenen Basisrezeptur, wobei sämtliche Einsatzstoffe in Gew.-% bezogen auf 100Gew.-% der Monomermischung angegeben sind. Tabelle 1 nennt auch die jeweiligen Polymerisationsbedingungen (Temperatur, Umsatz und Zeit).

**Tabelle 1: Herstellung der unhydrierten Nitril-Dien-Carbonsäureester-Copolymere (NBR 1 - 4; erfindungsgemäße Beispiele sind mit einem Stern * gekennzeichnet).**

| **NBR-Carbonsäureester** | **1** | **2*** | **3** | **4** |
|---|---|---|---|---|
| **Monomere** | | | | |
| Acrylnitril (ACN) | 18 | 27 | 16 | 21 |
| 1,3-Butadien (BD) | 31 | 46 | 32 | 24 |
| Butoxydiethylenglycol-methacrylat (PEG-2-MA) | 51 | 27 | | |
| Butylacrylat (BA) | | | 52 | 55 |
| Gesamtwassermenge | 190 | 190 | 190 | 190 |
| SDS | 2,4 | 2,4 | 1,44 | 1,44 |
| Na-Salz der dispro-portionierten Harzsäure | 0,5 | 0,5 | 0,4 | 0,4 |
| Na₂CO₃ | 0,12 | 0,12 | 0,12 | 0,12 |
| pH | 10,5 ±0,5 | 10,5 ±0,5 | 10,5 ±0,5 | 10,5 ±0,5 |
| t-DDM | 0,25 | 0,30 | 0,29 | 0,29 |
| Glidox^{®} 500 | 0,02 | 0,02 | 0,02 | 0,02 |
| Prämix-Lösung FeSO₄ | 0,03 | 0,02 | 0,03 | 0,03 |
| Diethylhydroxylamin | 0,2 | 0,2 | 0,2 | 0,2 |
| Stabilisator | | | 0,5 | 0,5 |

| **Polymerisations-bedingungen** | | | | |
|---|---|---|---|---|
| Polymerisations-temperatur [°C] | 12 | 12 | 12 | 12 |
| Polymerisationsumsatz [%] | 71,5 | 72,2 | 68,4 | 71,1 |
| Polymerisationszeit [h] | 5 | 7 | 6,5 | 7 |

**Tabelle 2: Zugabe der Inkremente der Nitril-Dien-Carbonsäureester-Copolymere (NBR 1 - 4)**

| Die Zugabe der Inkremente der Monomere erfolgte bei den angegebenen Monomerumsätzen ± 5%. | | | | |
|---|---|---|---|---|
| **NBR** | **1** | **2** | **3*** | **4*** |
| Umsatz [%] | ACN (a) / BD (b) [Gew.-%] | | | |
| 21 | 3/6 | -/- | -/- | 3,5/6 |
| 33 | -/- | 9/- | -/- | -/- |
| 42 | 3/7 | -/- | 3/6 | 2,5/3 |
| 48 | 3/6 | -/- | -/- | -/- |
| 63 | -/- | -/- | 2/4 | 2,5/3 |

| | | | | |
|---|---|---|---|---|
| *Umsatz bei 27% | | | | |

Die Herstellung der Nitril-Dien-Carbonsäureester-Copolymere erfolgte diskontinuierlich in einem 5 L- Autoklaven mit Rührwerk. Bei den Autoklavenansätzen wurden jeweils 1,25 kg der Monomermischung und eine Gesamtwassermenge von 2,1 kg sowie EDTA in einer äquimolaren Menge bezogen auf das Fe-II verwendet. Von dieser Wassermenge wurden 1,9 kg mit dem Emulgator im Autoklaven vorgelegt und mit einem Stickstoffstrom gespült. Danach wurden die entstabilisierten Monomeren und die in der Tabelle angegebene Menge des Molekulargewichtsreglers t-DDM zugegeben und der Reaktor verschlossen. Nach der Thermostatisierung des Reaktorinhalts wurden die Polymerisationen durch die Zugabe der Prämix-Lösungen und des Hydroperoxid gestartet.

Der Polymerisationsverlauf wurde durch gravimetrische Umsatzbestimmungen verfolgt. Bei Erreichen der in Tabelle 1 angegebenen Umsätze wurde die Polymerisation durch Zugabe einer wässrigen Lösung von Diethylhydroxylamin abgestoppt. Nicht umgesetzte Monomere und sonstige flüchtige Bestandteile wurden mittels Wasserdampfdestillation entfernt.

Vor der Koagulation des jeweiligen NBR-Latex wurde dieser jeweils mit einer 45%igen Dispersion von Vulkanox^{®} BKF (0,1 Gew. % Vulkanox^{®} BKF bezogen auf NBR-Feststoff) oder der Stabilisatormischung (2,2'-Methylene-bis(4-methyl-6-nonyl)phenol (CAS 7786-17-6) und styrolisiertes Diphenylamin (CAS 68442-68-2), 0.5 Gew% bezogen auf NBR Feststoff) versetzt. Anschließend wurde mit CaCl₂ koaguliert, gewaschen und die erhaltenen Krümel getrocknet.

Die getrockneten NBR-Kautschuke wurden durch die Mooney-Viskosität, den ACN-Gehalt und die Glasübergangstemperatur charakterisiert und der Gehalt der Termonomere durch ¹H-NMR-Analyse bestimmt (Tabelle 3).

**Tabelle 3: Zusammensetzung und Eigenschaften der unhydrierten Nitril-Dien-Carbonsäureester-Copolymere 1 bis 4 und der kommerziell erhältlichen Nitril-Dien-Kautschuke 5 bis 7 (einpolymerisierte Monomermengen in Gew.-%; erfindungsgemäße Beispiele mit einem Stern * gekennzeichnet)**

| **NBR** | | **1** | **2^{*}** | **3** | **4** | **5** | **6** | **7** |
|---|---|---|---|---|---|---|---|---|
| **ACN (a)** | [Gew.-%] | 15 | 25 | 16 | 19 | 22 | 28 | 34 |
| **BD (b)** | [Gew.-%] | 34 | 51 | 45 | 52 | 78 | 72 | 66 |
| **PEG-2-MA (c)** | [Gew.-%] | 51 | 24 | | | | | |
| **BA** | [Gew.-%] | | | 39 | 29 | | | |
| **Mooney Viskosität ML(1+4@100°C)** | MU | 17 | 17 | 29 | 39 | 55 | 43 | 43 |

### II Herstellung von Vulkanisaten der Nitril-Dien-Carbonsäureester-Copolymere (NBR V1 bis V7):

### Herstellung der vulkanisierbaren Zusammensetzungen:

Alle Kautschukmischungen wurden auf einem Mischwalzwerk hergestellt. Der Durchmesser der Walzen war 80 mm, die Länge 200 mm. Die Walzen wurden auf 30°C vorgewärmt, die Geschwindigkeit der vorderen Walze war 16,5 RPM, die der hinteren Walze 20 PRM, wodurch eine Friktion von 1:1,2 erreicht wurde.

Der Kautschuk wurde vorgelegt und eine (1) Minute gemischt, bis sich ein glattes Walzfell gebildet hat. Nachfolgend wurde zuerst der Ruß, dann die Additive und zuletzt die Vernetzungschemikalien eingemischt. Insgesamt betrug die Mischzeit 10 bis 12 Minuten.

**Tabelle 4: Zusammensetzung der vulkanisierbaren Zusammensetzungen (V1 bis V7; erfindungsgemäße Beispiele sind mit einem Stern * gekennzeichnet).**

| **Beispiel** | **V1** | **V2*** | **V3** | **V4** | **V5** | **V6** | **V7** |
|---|---|---|---|---|---|---|---|
| **NBR-Copolymer-Zusammensetzung** | **Gew.-%** | **Gew.-%** | **Gew.-%** | **Gew.-%** | **Gew.-%** | **Gew.-%** | **Gew.-%** |
| ACN (a) | 15 | 25 | 16 | 19 | 22 | 28 | 34 |
| BD (b) | 34 | 51 | 45 | 52 | 78 | 72 | 66 |
| PEG-2-MA (c) | 51 | 24 | | | | | |
| BA (d) | | | 39 | 29 | | | |

| **NBR-Copolymer** | **Teile** | **Teile** | **Teile** | **Teile** | **Teile** | **Teile** | **Teile** |
|---|---|---|---|---|---|---|---|
| NBR 1* | 100 | | | | | | |
| NBR 2* | | 100 | | | | | |
| NBR 3 | | | 100 | | | | |
| NBR 4 | | | | 100 | | | |
| NBR 5 | | | | | 100 | | |
| NBR 6 | | | | | | 100 | |
| NBR 7 | | | | | | | |
| NBR 8 | | | | | | | 100 |

| **Andere Komponenten** | **phr** | **phr** | **phr** | **phr** | **phr** | **phr** | **phr** |
|---|---|---|---|---|---|---|---|
| Corax^{®} N 550/30 | 30 | 30 | 30 | 30 | 30 | 30 | 30 |
| Regal^{®} SRF / N772 | 50 | 50 | 50 | 50 | 50 | 50 | 50 |
| Vulkanol^{®} OT | 10 | 10 | 10 | 10 | 10 | 10 | 10 |
| Edenor^{®} C18-98 MY | 0,3 | 0,3 | 0,3 | 0,3 | 0,3 | 0,3 | 0,3 |
| Vulkanox^{®} HS/LG | 1,5 | 1,5 | 1,5 | 1,5 | 1,5 | 1,5 | 1,5 |
| Vulkanox^{®} MB2/MG | 1,5 | 1,5 | 1,5 | 1,5 | 1,5 | 1,5 | 1,5 |
| Rhenocure^{®} IS 90-20 | 0,37 | 0,37 | 0,37 | 0,37 | 0,37 | 0,37 | 0,37 |
| Zinkoxyd Aktiv | 5 | 5 | 5 | 5 | 5 | 5 | 5 |
| Vulkacit^{®} NZ/EGC | 1,5 | 1,5 | 1,5 | 1,5 | 1,5 | 1,5 | 1,5 |
| Vulkacit^{®} Thiuram/C | 2 | 2 | 2 | 2 | 2 | 2 | 2 |
| Vulkalent^{®} E/C | 1 | 1 | 1 | 1 | 1 | 1 | 1 |

**Tabelle 5: Vernetzungsdichte der Vulkanisate V1 bis V7**

| **MDR 160°C** | **Einheit** | **V1** | **V2*** | **V3** | **V4** | **V5** | **V6** | **V7** |
|---|---|---|---|---|---|---|---|---|
| S min | dNm | 0,8 | 1,5 | 1,1 | 1,1 | 2,5 | 1,4 | 1,2 |
| S max | dNm | 12,7 | 17,4 | 18,7 | 16,6 | 22,1 | 21,7 | 21,5 |
| TS 1 | min | 2,1 | 1,6 | 2,0 | 2,0 | 1,5 | 1,5 | 1,4 |
| TS 2 | min | 2,3 | 1,9 | 2,3 | 2,3 | 1,7 | 1,7 | 1,5 |
| t 10 | min | 2,1 | 1,8 | 2,2 | 2,2 | 1,7 | 1,7 | 1,5 |
| t 25 | min | 2,5 | 2,1 | 2,7 | 2,7 | 2,0 | 2,0 | 1,8 |
| t 50 | min | 3,0 | 2,6 | 3,3 | 3,5 | 2,4 | 2,5 | 2,2 |
| t 70 | min | 3,6 | 3,1 | 4,0 | 4,3 | 2,8 | 3,0 | 2,7 |
| t 80 | min | 4,1 | 3,5 | 4,8 | 5,1 | 3,1 | 3,4 | 3,1 |
| t 90 | min | 4,8 | 4,2 | 6,5 | 7,0 | 3,8 | 4,2 | 4,0 |
| t 95 | min | 5,4 | 5,3 | 8,7 | 9,7 | 4,7 | 5,2 | 5,3 |

Die Vernetzungseigenschaften des erfindungsgemäßen Vulkanisats V2 ist vergleichbar mit Butylacrylathaltigen NBR Copolymeren (V3 und V4) sowie den kommerziell erhältlichen NBR Copolymeren (V5 bis V7).

Die Formkörper (Platten mit 2 mm Dicke) für die Durchführung der weiteren Bestimmungen wurden durch Vulkanisation bei 160°C für 15 Minuten hergestellt.

**Tabelle 6: Physikalische Eigenschaften der ungealterten Vulkanisate V1 bis V7**

| **Zugprüfung** | | **V1** | **V2*** | **V3** | **V4** | **V5** | **V6** | **V7** |
|---|---|---|---|---|---|---|---|---|
| TS | MPa | 8,3 | 11,2 | 10,2 | 13,1 | 15,4 | 14,4 | 15,1 |
| EB | % | 210 | 232 | 226 | 250 | 297 | 317 | 340 |
| M50 | MPa | 1,4 | 1,8 | 1,8 | 1,9 | 2 | 2,1 | 2,1 |
| M100 | MPa | 3,7 | 4,2 | 4,2 | 4,8 | 4,1 | 4,2 | 4,1 |
| Härte | Shore A | 58,1 | 63,5 | 64,8 | 62,5 | 68,3 | 69,4 | 69,7 |

| **Glasübergangstemperatur** | | | | | | | | |
|---|---|---|---|---|---|---|---|---|
| TR 10 | °C | -48,7 | -41,8 | -39,2 | -31,1 | -40,8 | -32,8 | -27 |
| TR 30 | °C | -43,2 | -37 | -35,3 | -26,7 | -36 | -28,9 | -23,4 |
| TR 50 | °C | -38,7 | -32,8 | -31,9 | -23,3 | -31,2 | -25 | -20 |
| TR 70 | °C | -33,1 | -27,2 | -27,2 | -19,1 | -23,8 | -19,2 | -14,9 |
| TR 70 - TR 10 | °C | 15,5 | 14,6 | 12 | 11,9 | 17 | 13,6 | 12,1 |
| DSC Tg | °C | -57,5 | -48,5 | -44,5 | -37,3 | -50,0 | -38,4 | -31,3 |

Der Vergleich von V1 mit V2* sowie V5 mit V6 und V7 zeigt, das mit einem verringerten Gehalt an ACN die Tg des Vulkanisats sinkt.

Beim Vergleich von V2 mit V5 ist zu sehen, dass der Austausch von BD durch BDGMA bei ungefähr gleichbleibender Menge an ACN zu vergleichbaren TR10 und DSC-Werten führt.

V1 weist eine niedrigere Tg auf als das erfindungsgemäße Vulkanisat V2.

**Tabelle 7: Physikalische Eigenschaften der Vulkanisate V1 bis V7 nach Lagerung in IRM 903 bei 100°C für 3 Tage**

| **Alterungs-Eigenschaften** | **Einheit** | **V1** | **V2*** | **V3** | **V4** | **V5** | **V6** | **V7** |
|---|---|---|---|---|---|---|---|---|
| TS | MPa | 8,5 | 14,2 | 11,5 | 13,8 | 15,5 | 15,3 | 17,2 |
| EB | % | 166 | 234 | 219 | 213 | 273 | 285 | 324 |
| M50 | MPa | 1,7 | 2,2 | 1,9 | 2,1 | 1,8 | 2,1 | 2,4 |
| M100 | MPa | 4,7 | 5,4 | 4,8 | 5,8 | 4,3 | 4,6 | 5 |
| Härte | Shore A | 60 | 67,2 | 60 | 63,7 | 60,2 | 66,1 | 70,9 |
| Δ TS | % | 2,4 | 26,8 | 12,7 | 5,3 | 0,6 | 6,3 | 13,9 |
| Δ EB | % | -21,0 | 0,9 | -3,1 | -14,8 | -8,1 | -10,1 | -4,7 |
| Δ M50 | % | 21,4 | 22,2 | 5,6 | 10,5 | -10,0 | 0,0 | 14,3 |
| Δ M100 | % | 27,0 | 28,6 | 14,3 | 20,8 | 4,9 | 9,5 | 22,0 |
| Δ Härte | Shore A | 1,9 | 3,7 | -4,8 | 1,2 | -8,1 | -3,3 | 1,2 |
| Δ Volumen | % | 2,4 | -0,2 | 11,9 | 4,9 | 18,3 | 8,1 | 2,4 |
| Δ Gewicht | % | 1,0 | -1,0 | 8,2 | 2,9 | 13,1 | 5,7 | 1,3 |

Das erfindungsgemäße Nitril-Dien-Carbonsäureester-Copolymer Vulkanisat V2 weist eine verringerte Quellung (Volumenszunahme) nach drei Tagen Alterung in IRM 903 auf, verglichen mit dem Vergleichsvulkanisat V1 oder den Copolymeren V5 und V6 mit einem ähnlichen Gehalt an Acrylnitrilmonomeren von 22 bis 28 Gew.-%.

Das erfindungsgemäße Vulkanisat V2 mit BDGMA als Termonomer weist somit sowohl eine niedrige Glasübergangstemperatur (TR 10 bzw. DSC Tg) von weniger als -40 °C und zugleich eine geringe Quellung in Öl auf.

**Tabelle 8: Physikalische Eigenschaften der Vulkanisate V1 bis V7 nach Lagerung in IRM 903 bei 100°C für 7 Tage**

| **Alterungs-Eigenschaften** | **Einheit** | **V1** | **V2*** | **V3** | **V4** | **V5** | **V6** | **V7** |
|---|---|---|---|---|---|---|---|---|
| TS | MPa | 10,2 | 13,3 | 12 | 14,8 | 15,8 | 14,8 | 17 |
| EB | % | 190 | 208 | 214 | 223 | 260 | 255 | 270 |
| M50 | MPa | 1,9 | 2,3 | 1,9 | 2,3 | 1,8 | 2,2 | 2,7 |
| M100 | MPa | 4,9 | 5,6 | 5 | 6,1 | 4,4 | 4,9 | 5,6 |
| Härte | Shore A | 63,5 | 69,9 | 61,8 | 65,7 | 60,4 | 67,7 | 72,6 |
| Δ TS | % | 22,9 | 18,8 | 17,6 | 13,0 | 2,6 | 2,8 | 12,6 |
| Δ EB | % | -9,5 | -10,3 | -5,3 | -10,8 | -12,5 | -19,6 | -20,6 |
| Δ M50 | % | 35,7 | 27,8 | 5,6 | 21,1 | -10,0 | 4,8 | 28,6 |
| Δ M100 | % | 32,4 | 33,3 | 19,0 | 27,1 | 7,3 | 16,7 | 36,6 |
| Δ Härte | Shore A | 5,4 | 6,4 | -3 | 3,2 | -7,9 | -1,7 | 2,9 |
| Δ Volumen | % | 3,4 | 0,6 | 13,3 | 5,9 | 18,9 | 8,6 | 3,7 |
| Δ Gewicht | % | 0,1 | -1,7 | 7,8 | 2,2 | 12,1 | 4,8 | 0,8 |

Das erfindungsgemäße Vulkanisat V2 weist eine verringerte Quellung (Volumenszunahme) nach 7 Tagen Alterung in IRM 903 auf, verglichen mit dem Vergleichsvulkanisat V1 oder den Vergleichsvulkanisaten V5 und V6 mit einem ähnlichen Gehalt an Acrylnitrilmonomeren von 22 bis 28 Gew.-%.

**Tabelle 9: Eigenschaften der Vulkanisate vor und nach Lagerung in Fuel C bei 23°C für 3 Tage**

| **Alterungs-Eigenschaften** | | **V1** | **V2*** | **V3** | **V4** | **V5** | **V6** | **V7** |
|---|---|---|---|---|---|---|---|---|
| TS | MPa | 3,8 | 5,8 | 4,3 | 5,6 | 4,7 | 6,8 | 7,1 |
| EB | % | 88 | 118 | 89 | 102 | 96 | 147 | 157 |
| M50 | MPa | 1,6 | 1,7 | 2 | 1,9 | 1,9 | 1,7 | 1,6 |
| M100 | MPa | | 4,7 | | 5,4 | 5,1 | 4,2 | 4 |
| Härte | Shore A | 45 | 51,5 | 49,7 | 49,8 | 49,6 | 52,2 | 54,6 |
| Δ TS | % | -54,2 | -48,2 | -57,8 | -57,3 | -69,5 | -52,8 | -53,0 |
| Δ EB | % | -58,1 | -49,1 | -60,6 | -59,2 | -67,7 | -53,6 | -53,8 |
| Δ M50 | % | 14,3 | -5,6 | 11,1 | 0,0 | -5,0 | -19,0 | -23,8 |
| Δ M100 | % | | 11,9 | | 12,5 | 24,4 | 0,0 | -2,4 |
| Δ Härte | Shore A | -13,1 | -12 | -15,1 | -12,7 | -18,7 | -17,2 | -15,1 |
| Δ Volumen | % | 64,8 | 45,3 | 81,2 | 62,8 | 79,2 | 54,9 | 40,6 |
| Δ Gewicht | % | 39,3 | 28,0 | 51,5 | 39,0 | 51,3 | 35,8 | 26,4 |

Das erfindungsgemäße Vulkanisat V2* weist ebenfalls eine verringerte Quellung nach 3 Tagen Alterung in Fuel C auf, verglichen mit dem Vergleichsvulkanisat V1 oder den Vergleichsvulkanisaten V5 und V6 mit einem ähnlichen Gehalt an Acrylnitrilmonomeren von 22 bis 28 Gew.-%.

Vulkanisate V3 und V4 enthaltend Terpolymere auf Basis von Butylacrylat (BA) sind nicht in der Lage gleichzeitig eine niedrige Glasübergangstemperatur und eine geringe Veränderung der Quellung bei Alterung aufzuweisen wie das erfindungsgemäße Vulkanisat V2*.

Der Vergleich von V1 mit V3, welche beide eine ähnliche Menge an Acrylnitril-Monomeren aufweisen, zeigt, dass der Austausch der Butylacrylat-Termonomers in V3 durch das PEG-2-MA (BDGMA) eine deutliche Reduktion der Volumensveränderung (Quellung) bewirkt.

Die Quellungseigenschaften des erfindungsgemäßen Terpolymers V2 ähneln jenen des Copolymers V7, welches jedoch deutlich mehr Acrylnitril enthält (nämlich 34 Gew.-% vergleichen von nur 25 Gew.-% in V2). Im Vergleich zu V7 ist die Glasübergangstemperatur des erfindungsgemäßen Vulkanisats V2* jedoch deutlich geringer.

Der Vergleich von V1 mit V2* macht deutlich, dass Vulkanisate alleine auf Basis von Terpolymeren mit geringen Mengen an Nitrilmonomereinheiten nicht ausreichend sind um gleichzeitig auch eine besonders niedrige Quellung zu erzielen.

Die mechanischen Eigenschaften des erfindungsgemäßen Vulkanisats V2* sind im Wesentlichen nicht verschlechtert im Vergleich zu den Vulkanisaten auf Basis der kommerziell erhältlichen Copolymeren V5 bis V7.

Der Vorteil der Erfindung liegt insbesondere darin, dass Vulkanisate auf Basis der erfindungsgemäßen Nitril-Dien-Carbonsäureester-Copolymere eine geringe Quellung und gleichzeitig eine gute Kälteflexibilität aufweisen.

In der Kombination dieser Eigenschaften sind die erfindungsgemäßen Nitril-Dien-Carbonsäureester-Copolymere bislang kommerziell verfügbaren bzw. aus dem Stand der Technik bekannten Nitril-Dien-Carbonsäureester-Copolymeren überlegen.

## Patentansprüche

1. Unhydrierte **Nitril-Dien-Carbonsäureester-Copolymere,** enthaltend
(a) **15 bis 40 Gew.-%** zumindest einer α,β-ethylenisch ungesättigten **Nitrileinheit,**
(b) **30 bis 65 Gew.-%** zumindest einer konjugierten **Dieneinheit** und
(c) **20 bis 30 Gew.-%** zumindest einer **PEG-Acrylateinheit (c)**, **dadurch gekennzeichnet, dass** die **PEG-Acrylateinheit (c)** Butoxy-polyethylenglycol(meth)acrylat mit **2 Ethylenglycol-Wiederholungseinheiten** ist.

2. Unhydrierte Nitril-Dien-Carbonsäureester-Copolymere nach Anspruch 1, **dadurch gekennzeichnet, dass** die α,β-ethylenisch ungesättigten **Nitrileinheiten (a)** von Acrylnitril, Methacrylnitril, Ethacrylnitril oder Mischungen davon, bevorzugt **Acrylnitril** abgeleitet sind.

3. Unhydrierte Nitril-Dien-Carbonsäureester-Copolymere nach einem der Ansprüche 1 oder 2, **dadurch gekennzeichnet, dass** die konjugierten **Dieneinheiten (b)** von 1,3-Butadien, Isopren, 2,3-Dimethylbutadien, 1,3-Pentadien (Piperylen) oder Mischungen davon, bevorzugt **1,3-Butadien** abgeleitet sind.

4. Unhydrierte Nitril-Dien-Carbonsäureester-Copolymere nach einem der Ansprüche 1 bis 3, **dadurch gekennzeichnet dass** es sich um Copolymere enthaltend 15 bis 40 Gew.-% Acrylnitrileinheiten, 30 bis 65 Gew.-% 1,3-Butadieneinheiten und 20 bis 30 Gew.-% Butoxydiethylenglycol(meth)acrylateinheiten handelt.

5. **Vulkanisierbare Zusammensetzungen** enthaltend unhydrierte Nitril-Dien-Carbonsäureester-Copolymere nach einem der Ansprüche 1 bis 4 und mindestens einen Vernetzer.

6. **Verfahren zur Herstellung von vulkanisierbaren Zusammensetzungen** gemäß Anspruch 5, durch Mischen eines unhydrierten Nitril-Dien-Carbonsäureester-Copolymers nach einem der Ansprüche 1 bis 4 mit mindestens einem Vernetzer.

7. **Verfahren zur Herstellung von Vulkanisaten,** bevorzugt als Formteilen, basierend auf unhydrierten Nitril-Dien-Carbonsäureester-Copolymeren, **dadurch gekennzeichnet, dass** man die vulkanisierbare Zusammensetzung gemäß Anspruch 5 einer Vulkanisation unterwirft, bevorzugt in einem Formgebungsverfahren und ferner bevorzugt bei Temperaturen im Bereich von 100 °C bis 250 °C, besonders bevorzugt bei Temperaturen im Bereich von 120 °C bis 250 °C und ganz besonders bevorzugt von 130 °C bis 250 °C.

8. **Vulkanisate** basierend auf unhydrierten Nitril-Dien-Carbonsäureester-Copolymeren nach einem der Ansprüche 1 bis 4, erhältlich gemäß dem Verfahren nach Anspruch 7.

9. Vulkanisate nach Anspruch 8, **dadurch gekennzeichnet, dass** es sich um **Formteile** handelt die bevorzugt ausgewählt sind aus der Gruppe bestehend aus Riemen, Dichtungen und Dichtprofilen, Walzen, Membranen, Schuhkomponenten, Schläuchen, Dämpfungselementen, Dämmstoffen, Statoren und Kabelmänteln, bevorzugt Schläuche und Dichtungen.

10. **Verwendung** des unhydrierten Nitril-Dien-Carbonsäureester-Copolymers nach Anspruch 1 bis 4 zur Herstellung von Formteilen, bevorzugt zur Herstellung von Formteilen ausgewählt aus der Gruppe bestehend aus Riemen, Dichtungen und Dichtprofilen, Walzen, Membranen, Schuhkomponenten, Schläuchen, Dämpfungselementen, Dämmstoffen, Statoren und Kabelmänteln, bevorzugt Schläuche und Dichtungen, besonders bevorzugt Riemen Schläuchen und Dichtungen.

## Claims

1. Unhydrogenated nitrile-diene-carboxylic ester copolymers containing
(a) 15% to 40% by weight of at least one α,β-ethylenically unsaturated nitrile unit,
(b) 30% to 65% by weight of at least one conjugated diene unit and
(c) 20% to 30% by weight of at least one PEG acrylate unit (c), **characterized in that** the PEG acrylate unit (c) is butoxy polyethylene glycol (meth)acrylate having 2 repeat ethylene glycol units.

2. Unhydrogenated nitrile-diene-carboxylic ester copolymers according to Claim 1, **characterized in that** the α,β-ethylenically unsaturated nitrile units (a) are derived from acrylonitrile, methacrylonitrile, ethacrylonitrile or mixtures thereof, preferably acrylonitrile.

3. Unhydrogenated nitrile-diene-carboxylic ester copolymers according to either of Claims 1 and 2, **characterized in that** the conjugated diene units (b) are derived from 1,3-butadiene, isoprene, 2,3-dimethylbutadiene, 1,3-pentadiene (piperylene) or mixtures thereof, preferably 1,3-butadiene.

4. Unhydrogenated nitrile-diene-carboxylic ester copolymers according to any of Claims 1 to 3, **characterized in that** copolymers are those containing 15% to 40% by weight of acrylonitrile units, 30% to 65% by weight of 1,3-butadiene units and 20% to 30% by weight of butoxy diethylene glycol (meth)acrylate units.

5. Vulcanizable compositions containing unhydrogenated nitrile-diene-carboxylic ester copolymers according to any of Claims 1 to 4 and at least one crosslinker.

6. Process for producing vulcanizable compositions according to Claim 5 by mixing an unhydrogenated nitrile-diene-carboxylic ester copolymer according to any of Claims 1 to 4 with at least one crosslinker.

7. Process for producing vulcanizates, preferably in the form of mouldings, based on unhydrogenated nitrile-diene-carboxylic ester copolymers, **characterized in that** the vulcanizable composition according to Claim 5 is subjected to a vulcanization, preferably in a shaping process and further preferably at temperatures in the range from 100°C to 250°C, more preferably at temperatures in the range from 120°C to 250°C and most preferably from 130°C to 250°C.

8. Vulcanizates based on unhydrogenated nitrile-diene-carboxylic ester copolymers according to any of Claims 1 to 4, obtainable by the process according to Claim 7.

9. Vulcanizates according to Claim 8, **characterized in that** they are mouldings that are preferably selected from the group consisting of belts, gaskets and gasket profiles, rollers, membranes, footwear components, hoses, damping elements, insulating materials, stators and cable sheaths, preferably hoses and gaskets.

10. Use of the unhydrogenated nitrile-diene-carboxylic ester copolymer according to Claims 1 to 4 for production of mouldings, preferably for production of mouldings selected from the group consisting of belts, gaskets and gasket profiles, rollers, membranes, footwear components, hoses, damping elements, insulating materials, stators and cable sheaths, preferably hoses and gaskets, more preferably belts, hoses and gaskets.

## Revendications

1. **Copolymères nitrile-diène-carboxylate** non hydrogénés contenant
(a) **15 à 40 % en poids** d'au moins un **motif nitrile** à insaturation α,β-éthylénique,
(b) **30 à 65 % en poids** d'au moins un **motif diène** conjugué et
(c) **20 à 30 % en poids** d'au moins un **motif acrylate de PEG (c), caractérisés en ce que** le **motif acrylate de PEG (c)** est le (méth)acrylate de butoxypolyéthylèneglycol ayant **2 motifs répétitifs éthylèneglycol.**

2. Copolymères nitrile-diène-carboxylate non hydrogénés selon la revendication 1, **caractérisés en ce que** les **motifs nitrile** à insaturation α,β-éthylénique **(a)** dérivent de l'acrylonitrile, du méthacrylonitrile, de l'éthacrylonitrile ou de mélanges de ceux-ci, de préférence de l**'acrylonitrile.**

3. Copolymères nitrile-diène-carboxylate non hydrogénés selon l'une des revendications 1 ou 2, **caractérisés en ce que** les **motifs diène** conjugué **(b)** dérivent du 1,3-butadiène, de l'isoprène, du 2,3-diméthylbutadiène, du 1,3-pentadiène (pipérylène) ou de mélanges de ceux-ci, de préférence du **1,3-butadiène.**

4. Copolymères nitrile-diène-carboxylate non hydrogénés selon l'une des revendications 1 à 3, **caractérisés en ce qu'**il s'agit de copolymères contenant 15 à 40 % en poids de motifs acrylonitrile, 30 à 65 % en poids de motifs 1,3-butadiène et 20 à 30 % en poids de motifs (méth)acrylate de butoxydiéthylèneglycol.

5. **Compositions vulcanisées** contenant des copolymères nitrile-diène-carboxylate non hydrogénés selon l'une des revendications 1 à 4 et au moins un agent de réticulation.

6. **Procédé de fabrication de compositions vulcanisables** selon la revendication 5, par mélange d'un copolymère nitrile-diène-carboxylate non hydrogéné selon l'une des revendications 1 à 4 à au moins un agent de réticulation.

7. **Procédé de fabrication de vulcanisats,** de préférence sous forme de pièces moulées, à base de copolymères nitrile-diène-carboxylate non hydrogénés, **caractérisé en ce qu'**on soumet la composition vulcanisable selon la revendication 5 à une vulcanisation, de préférence dans un procédé de façonnage, et en outre à des températures dans la plage de 100 °C à 250 °C, d'une manière particulièrement préférée à des températures dans la plage de 120 °C à 250 °C et d'une manière tout particulièrement préférée de 130 °C à 250 °C.

8. **Vulcanisats** à base de copolymères nitrile-diène-carboxylate non hydrogénés selon l'une des revendications 1 à 4, pouvant être obtenus par le procédé selon la revendication 7.

9. Vulcanisats selon la revendication 8, **caractérisés en ce qu'**il s'agit de **pièces moulées** qui, de préférence, sont choisies dans le groupe consistant en les courroies, les joints d'étanchéité et les profils d'étanchéité, les rouleaux, les membranes, les composants de chaussure, les tuyaux flexibles, les éléments d'amortissement, les isolants, les stators et les gaines de câble, de préférence les tuyaux flexibles et les joints.

10. **Utilisation** du copolymère nitrile-diène-carboxylate non hydrogéné selon les revendications 1 à 4 pour fabriquer des pièces moulées, de préférence pour fabriquer des pièces moulées choisies dans le groupe consistant en les courroies, les joints d'étanchéité et les profils d'étanchéité, les rouleaux, les membranes, les composants de chaussure, les tuyaux flexibles, les éléments d'amortissement, les isolants, les stators et les gaines de câble, de préférence les tuyaux flexibles et les joints, d'une manière particulièrement préférée les courroies, les tuyaux flexibles et les joints.
